(19) Europäisches Patentamt
European Patent Office
Office européen des brevets

(11) **EP 4 679 365 A1**

(12) **EUROPEAN PATENT APPLICATION**
published in accordance with Art. 153(4) EPC

(43) Date of publication:
**14.01.2026 Bulletin 2026/03**

(21) Application number: 25768651.9

(22) Date of filing: **06.03.2025**

(51) International Patent Classification (IPC):
*G06T 7/00* (2017.01)       *G06V 10/74* (2022.01)
*G06V 10/44* (2022.01)       *G06V 10/82* (2022.01)
*G06T 5/70* (2024.01)        *G06N 20/00* (2019.01)

(52) Cooperative Patent Classification (CPC):
**G06N 20/00; G06T 5/70; G06T 7/00; G06V 10/44; G06V 10/74; G06V 10/82**

(86) International application number:
**PCT/KR2025/003007**

(87) International publication number:
**WO 2025/188095 (11.09.2025 Gazette 2025/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.03.2024 KR 20240032228**

(71) Applicant: **LG Management Development Institute Co., Ltd.**
**Seoul 07336 (KR)**

(72) Inventors:
• **KANG, Byung Jun**
**Yongin-si, Gyeonggi-do 16899 (KR)**
• **HYUN, Jee Ho**
**Incheon 21986 (KR)**
• **KIM, Sang Yun**
**Gimpo-si, Gyeonggi-do 10113 (KR)**
• **KOH, Young San**
**Seoul 04381 (KR)**
• **CUI, Run**
**Seoul 07803 (KR)**
• **JEON, Gi Young**
**Seoul 08366 (KR)**
• **LEE, Dong Hun**
**Seoul 03709 (KR)**
• **KIM, Seung Hwan**
**Seongnam-si, Gyeonggi-do 13586 (KR)**

(74) Representative: **BCKIP Part mbB MK1**
**Landsbergerstraße 98, 3.Stock**
**80339 München (DE)**

(54) **METHOD FOR MONITORING DETERMINATION RECORD FOR ANOMALY DETERMINATION GUIDE AND SYSTEM THEREFOR**

(57)     A method for monitoring judgment records for an outlier judgment guide according to an embodiment of the present disclosure is configured to detect at least one similarity image having a similarity greater than or equal to a predetermined reference with a predetermined inspection image, provide judgment detailed information, which is information specifying a judgement content on the presence or absence of an outlier, acquire first judgment result information, which is information specifying a judgement result on the presence or absence of an outlier for the inspection image, and then generates the inspection image and a first judgment result depending on a similarity between each of the inspection image and the similarity image.

FIG. 10

ACQUIRE PREDETERMINED INSPECTION IMAGE — S301

DETECT SIMILARITY IMAGE FOR ACQUIRED INSPECTION IMAGE — S303

FILTER DETECTED SIMILARITY IMAGE — S305

PROVIDE FILTERED SIMILARITY IMAGE — S307

ACQUIRE JUDGEMENT RESULT INFORMATION FOR INSPECTION IMAGE — S309

STORE AND MANAGE ACQUIRED JUDGEMENT RESULT INFORMATION — S311

EP 4 679 365 A1

**Description**

**BACKGROUND**

Field

The present disclosure relates to a method and system for monitoring judgment records for an outlier judgment guide and, more particularly, to a method and system for providing a guide for judging an outlier in real time based on past outlier judgement records.

Description of Related Art

Vision inspection equipment is designed to automatically detect defects that are visible in the appearance of products through computer vision technology including deep learning.

Based on data obtained through sensor equipment such as cameras, it is necessary to classify good products and defective products with very high precision. In order to control product quality, the equipment in the inspection process is required to operate uniformly and without problems.

However, the vision inspection equipment may not detect defects with 100% precision due to factors such as the introduction of new types of defects not previously generated during a process of training a classification model or noise generated by process environmental conditions. To prevent defect leakage, some products are ultimately monitored by workers.

Workers visually determine defects based on image data captured by equipment. However, vision inspection data often contains data with ambiguous boundaries between normal and defective products. These ambiguous shapes significantly decrease defect determination precision.

Inexperienced workers are particularly prone to making wrong determination. Inspection judgement results may frequently vary depending on the skill levels of inspectors, hindering consistency in inspection quality.

Efforts are being made to reduce the likelihood of errors made by initial workers by learning fixed rules, such as guidebooks. However, this approach is limited by the inability to learn about all possible scenarios.

Anomaly detection may mean a process of identifying abnormal patterns, outliers, and/or exceptions from given data.

In other words, the anomaly detection may be a process of detecting components that deviate from the attributes of normal data.

A system for implementing the anomaly detection is being actively used in various application fields where identification of abnormal patterns is critical, such as process monitoring, security intrusion detection, fraud identification, and/or medical diagnosis.

However, in cases where the data required for model training for anomaly detection is relatively rare or diverse and insufficient, such as when it is difficult to collect abnormal data containing a certain defect, when labeled data is limited, or when additional training is desired on a large amount of data without labels, there is a limit in implementing the performance of task processing for anomaly detection based thereon.

In addition, conventionally, anomaly detection based on specific images has been actively performed, particularly in the field of vision inspection. However, these images belong to high-dimensional data, and thus detecting outliers by using all pieces of data for the entire image *en bloc* is not efficient in terms of data processing and computational costs.

Furthermore, outliers are typically observed as abnormal patterns of varying sizes and shapes in small portions of the image. Conventional methods have a very low ability to identify such local patterns across the entire image.

Accordingly, there is a need to develop new technologies that may further improve the precision and efficiency of anomaly detection, even under limited environmental conditions, while simultaneously enhancing task processing performance.

(Related Patent Document 1) KR 10-2296471 B1

**SUMMARY**

An embodiment of the present disclosure is directed to implementing a method and system for providing a guide for judging an outlier in real time based on past outlier judgement records.

In this connection, an embodiment of the present disclosure provides a guide for judging an outlier utilizing a deep learning model specialized for anomaly detection using a patch feature-based learning method.

A method for monitoring judgment records for an outlier judgment guide according to an embodiment of the present disclosure includes: acquiring a predetermined inspection image; detecting at least one similarity image having a similarity greater than or equal to a predetermined reference with the acquired inspection image; providing judgment detailed information, which is information specifying a judgement content on the presence or absence of an outlier for each of the detected similarity image and the similarity image; acquiring first judgment result information, which is information specifying a determination result on the presence or absence of the outlier for the inspection image; and storing the inspection image and the first judgment result information in a database depending on a similarity between each of the inspection image and the similarity image.

In another aspect, the provision of the judgment detailed information includes providing at least one piece of information among worker-in-charge information, which is information specifying a worker-in-charge who performed a determination on the presence or absence of the outlier for the similarity image, and second judgement result information, which is information specifying a determination result on the presence or absence of the outlier for the similarity image.

In another aspect, the detection of the similarity image includes measuring a raw data similarity between at least one overkill image stored in the database and the inspection image.

In another aspect, the detection of the similarity image further includes: acquiring an inspection feature vector, which is a feature vector for the inspection image, and an overkill feature vector, which is a feature vector for the overkill image, based on a predetermined image feature extraction model; and measuring a feature vector similarity, which is a similarity between the acquired inspection feature vector and the overkill feature vector.

In another aspect, the image feature extraction model includes an outlier detection model, which is a deep learning model specified in anomaly detection using a patch feature-based learning method.

In another aspect, the detection of the similarity image further includes calculating a decision similarity that specifies a final similarity between the inspection image and the overkill image based on the raw data similarity and the feature vector similarity.

In another aspect, the detection of the similarity image further includes detecting the similarity image based on the decision similarity and a preset similarity reference threshold.

In another aspect, the detection of the similarity image further includes: determining whether the number of detected similarity images meets a preset number thereof; and additionally detecting the similarity image when the preset number thereof is not met.

In another aspect, the additional detection of the similarity image includes: adjusting the similarity reference threshold; and detecting the similarity image based on the adjusted similarity reference threshold.

In another aspect, the provision of the similarity image and the judgement detailed information includes further providing the decision similarity.

In another aspect, the provision of the similarity image and the judgement detailed information includes: additionally detecting the similarity image according to a ratio of second judgment result information for each of the at least one similarity image; and further providing additional provision images, which are the additionally detected similarity images.

In another aspect, the provision of the similarity image and the judgement detailed information includes aligning the detected similarity images based on at least one of the worker-in-charge information or the similarity between each of the inspection image and the similarity image.

In another aspect, the storage in the database further includes storing the inspection image and the first judgment result information in the database according to whether the first judgment result information and the second judgment result information are identical.

In another aspect, the method for monitoring the judgment records for the outlier judgment guide according to an embodiment of the present disclosure further includes filtering the detected similarity images according to a preset condition.

In another aspect, the acquisition of the inspection image includes acquiring the inspection image based on an outlier detection model, which is a deep learning model specified in anomaly detection using a patch feature-based learning method.

A computing device according to an embodiment of the present disclosure: includes at least one vision inspection unit, at least one inspection monitoring processing unit, at least one monitoring interface (IF) unit, and at least one inspection database; controls the vision inspection unit to acquire a predetermined inspection image; controls the inspection monitoring processing unit to detect at least one similarity image having a similarity greater than or equal to a predetermined reference with the acquired inspection image; controls the monitoring IF unit to provide judgment detailed information, which is information specifying a judgement content on the presence or absence of an outlier for each of the detected similarity image and the similarity image; controls the monitoring IF unit to acquire first judgment result information, which is information specifying a determination result on the presence or absence of the outlier for the inspection image; and controls the inspection monitoring processing unit to store the inspection image and the first judgment result information in a database depending on the similarity between each of the inspection image and the similarity image.

The method and system for monitoring the judgment records for the outlier judgment guide according to an embodiment of the present disclosure provide a guide for judging an outlier in real time based on past outlier judgement records to help improve the consistency of real-time outlier judgment and minimize errors, thereby improving the overall quality and performance of a vision inspection process.

In this connection, the method and system for monitoring the judgment records for the outlier judgment guide according to an embodiment of the present disclosure utilizes a deep learning model specified in anomaly detection using a patch feature-based learning method to provide a guide for judging an outlier, thereby improving the quality of the guide provided and also improving the data processing efficiency for providing the guide.

## BRIEF DESCRIPTION OF THE DRAWING

FIG. 1 illustrates an example block diagram illustrating a computing system implementing an outlier judgement guide and monitoring service according to an embodiment of the present disclosure.

FIG. 2 illustrates an example block diagram illustrating a computing device implementing an outlier judgement guide and monitoring service according to an embodiment of the present disclosure.

FIG. 3 illustrates an example block diagram illustrating another aspect of a computing device implementing an outlier judgement guide and monitoring service according to an embodiment of the present disclosure.

FIG. 4 illustrates an example block diagram illustrating a computing system according to another aspect of an embodiment of the present disclosure.

FIG. 5 is an example block flowchart illustrating an outlier detection model according to an embodiment of the present disclosure.

FIG. 6 is a flowchart illustrating a patch feature learning method for anomaly detection according to an embodiment of the present disclosure.

FIG. 7 is a flowchart illustrating a patch feature-based feature representation learning method according to an embodiment of the present disclosure.

FIG. 8 is an example diagram illustrating an example of measuring similarity between patch features according to an embodiment of the present disclosure.

FIG. 9 is an example diagram illustrating an application example of a ReConPatch process according to an embodiment of the present disclosure.

FIG. 10 is a flowchart illustrating a method for monitoring judgment records for an outlier judgment guide according to an embodiment of the present disclosure.

FIG. 11 is a flowchart illustrating a method for detecting similarity images according to an embodiment of the present disclosure.

FIG. 12 is a conceptual diagram illustrating a method for detecting similarity images according to an embodiment of the present disclosure.

FIG. 13 is an example diagram illustrating a method for providing similarity images according to an embodiment of the present disclosure.

FIG. 14 is an example of providing additional provision images according to an embodiment of the present disclosure.

FIG. 15 is an example diagram illustrating a method for aligning similarity images upon provision according to an embodiment of the present disclosure.

## DETAILED DESCRIPTION

Embodiments can impose various transformations that can have various embodiments, and specific embodiments illustrated in the drawings will be described in detail in the detailed description. The advantages, features and methods for achieving the same will become apparent from the following description of the embodiments given in conjunction with the accompanying drawings. However, the present disclosure is not limited to the embodiments described herein but may be embodied in many different forms. It will be understood that, although the terms "first" or "second" may be used herein to distinguish one component from another component, these components should not be limited by these terms. In addition, a singular expression includes a plural expression, unless the context clearly states otherwise. In addition, it should be understood that the terms such as "include" or "have" are merely intended to indicate that features, or components described in the specification are present, and are not intended to exclude the possibility that one or more other features, or components will be added. In addition, components in the drawings may be exaggerated or shrunk for the convenience of descriptions. For example, since the size and thickness of each element in the drawings has been arbitrarily modified for the convenience of descriptions, it should be noted that the present disclosure is not necessarily limited to what has been shown in the drawings.

Hereinafter, embodiments of the present disclosure will be described in detail with reference to appended drawings. Throughout the specification, the same or corresponding component is assigned the same reference numeral, and repeated descriptions thereof will be omitted.

[Exemplary System Providing Outlier Judgement Guide and Monitoring Service]

Hereinafter, an exemplary system for implementing an outlier judgment guide and a monitoring service that performs patch feature-based learning for a predetermined pre-trained model based on an image data set for an outlier detection target is described in detail with reference to the attached drawings.

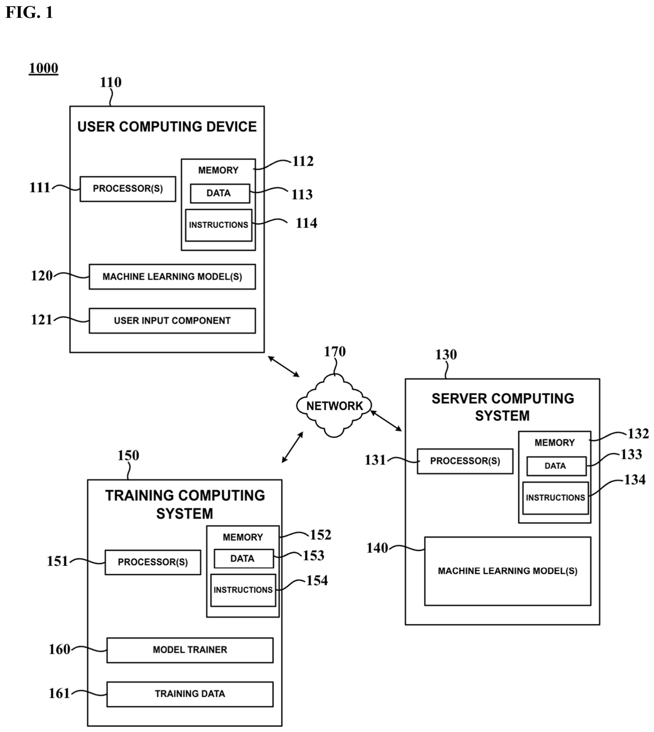

FIG. 1 illustrates an example block diagram illustrating a computing system implementing an outlier judgement guide and a monitoring service according to an embodiment of the present disclosure.

Referring to FIG. 1, a computing system 1000 which implements the outlier judgement guide and the monitoring service according to an embodiment includes a user computing device 110, a server computing system 130, and a training computing system 150, and any other devices which are configured to communicate through a network 170.

A patch feature learning method for anomaly detection according to an embodiment of the present disclosure may 1) be implemented and provided locally by the user computing device 110, 2) implemented and provided in the form of a web service by the server computing system 130 which communicates with the user computing device 110, and 3) implemented and provided by mutual association of the user computing device 110 and the server computing system 130.

In this connection, in an embodiment, the user computing device 110 and/or the server computing system 130 may train a machine learning model 120 and/or 140 through interaction with the training computing system 150 communicationally connected through the network 170. The training computing system 150 may be a system separated from the server computing system 130 or may be a portion of the server computing system 130.

In addition, in this connection, the artificial intelligence model (in an embodiment, an outlier detection model) may be 1) directly trained locally by the user computing device 110, 2) trained while the server computing system 130 and the user computing device 110 interact with each other through the network 170, and 3) trained by using various training techniques and learning techniques by the separate training computing system 150. In addition, the method may also be implemented by a method in which the artificial intelligence model trained by the training computing system 150 is transmitted to the user computing device 110 and/or the server computing system 130 through the network 170, and is provided and updated.

In some embodiments, the training computing system 150 may be a portion of the server computing system 130 or a portion of the user computing device 110.

The user computing device 110 may include various types of computing devices such as a smart phone, a cellular phone, a digital broadcasting device, personal digital assistants (PDA), a portable multimedia player (PMP), a desktop, a wearable device, an embedded computing device, and/or a tablet PC.

The user computing device 110 includes at least one processor 111 and a memory 112. Herein, the processor 110 may be configured of at least one or a plurality of processors electrically connected among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions.

The memory 112 may include one or more non-transitory/transitory computer-readable storage media, such as RAM, ROM, EEPROM, EPROM, flash memory devices, or magnetic disks, and combinations thereof, and may include web storage of servers performing storage functions of the memory on the Internet. The memory 112 may store data 113 and instructions 114 necessary for the at least one processor 111 to perform a functional operation, such as training the artificial intelligence model or executing outlier detection through the artificial intelligence model.

In an embodiment, the user computing device 110 may store at least one machine learning model 120.

Specifically, the user computing device 110 may be various machine learning models such as a plurality of neural networks (for example, deep neural networks) or other types of machine learning models, including non-linear models and/or linear models, and may be configured of a combination thereof.

In this connection, the neural network may include at least one of feed-forward neural networks, recurrent neural networks (for example, long short-term memory recurrent neural networks), convolutional neural networks and/or other forms of neural networks.

In an embodiment, the user computing device 110 may receive at least one machine learning model 120 from the server computing system 130 via the network 170, store the same in the memory 112, and then execute the stored machine learning model 120 by the processor 111 to perform the outlier detection.

In another embodiment, the server computing system 130 may include at least one machine learning model 140 and perform operations through the machine learning model 140, and may provide the outlier judgment guide and the monitoring service to a user by linking with the user computing device 110 in a manner of communicating data related thereto with the user computing device 110.

For example, the user computing device 110 may perform the outlier judgment guide and the monitoring service by providing an output for the input of a user using the machine learning model 140 through the server computing system 130 via the web.

In addition, the artificial intelligence model may also be implemented in such a way that at least some of the machine learning models 120 and/or 140 are executed on the user computing device 110 and the rest are executed on the server computing system 130.

In addition, the user computing device 110 may include at least one input component 121 that detects user input. For example, the user input component 121 may include a touch sensor (for example, a touch screen and/or a touch pad) that detects touch of an input medium of a user (for example, a finger or a stylus), an image sensor that detects a motion input of a user, a microphone, a button, a mouse and/or a keyboard that detects user voice input. In addition, the user input component 121 may include an interface and an external controller when receiving input from an external controller (for example, a mouse or a keyboard) through the interface.

The server computing system 130 includes at least one processor 131 and a memory 132. Herein, the processor 131 may be configured of at least one or a plurality of processors electrically connected among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions.

In addition, the memory 132 may include one or more non-transitory/transitory computer-readable storage media, such as RAM, ROM, EEPROM, EPROM, flash memory devices, or magnetic disks, and combinations thereof. The memory 132 may store data 133 and instructions 134 required for the processors 131 to perform a functional operation such as the train of the artificial intelligence model or the execution of the outlier detection through the artificial intelligence model.

In an embodiment, the server computing system 130 may be implemented to include one or more computing devices or computers. For example, the server computing system 130 may be implemented so that a plurality of computing devices operate according to sequential computing architecture, parallel computing architecture, or a combination thereof. Further, the server computing system 130 may include a plurality of computing devices connected through the network 170.

Further, the server computing device 130 may store one or more machine learning models 140. For example, the server computing system 130 may include a neural network and/or multilayer non-linear model as the machine learning model 140. An exemplary neural network may include a feed-forward neural network, a deep neural network, a recurrent neural network, and a convolution neural network.

The training computing system 150 includes at least one processor 151 and a memory 152. Herein, the processor 151 may be configured of at least one or a plurality of processors electrically connected among the CPU, the GPU, the ASICs, the DSPs, the DSPDs, the PLDs, the FPGAs, controllers, micro-controllers, microprocessors, and/or other electrical units for performing functions.

In addition, the memory 152 may include one or more non-transitory/transitory computer-readable storage media, such as RAM, ROM, EEPROM, EPROM, flash memory devices, or magnetic disks, and combinations thereof, and may include web storage of servers performing storage functions of the memory on the Internet. The memory 152 may store data 153 and instructions 154 necessary for the processor 151 to perform training of the artificial intelligence model.

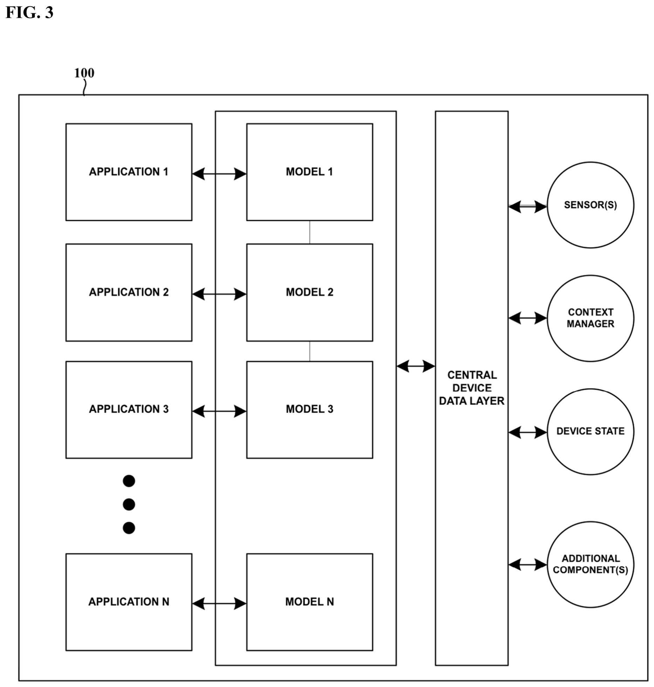

For example, the training computing system 150 may include a model trainer 160 configured to train the machine learning models 120 and/or 140 stored in the user computing device 110 and/or the server computing system 130 by using various training or learning techniques such as backpropagation of an error (according to the framework illustrated in FIG. 3).

For example, the model trainer 160 may perform updating one or more parameters of the machine learning models 120 and/or 140 based on a defined loss function by a backpropagation scheme.

In some implementation examples, the performance of the backpropagation of the error may include performing truncated backpropagation through time. The model trainer 160 may perform multiple generalization techniques (for example, weight reduction, drop-out, and/or knowledge distillation) in order to enhance a generalization capability of the trained machine learning models 120 and/or 140.

In particular, the model trainer 160 may train the machine learning models 120 and/or 140 based on a series of training data 161. Herein, the training data 161 may include, for example, different formats of data such as an image, an audio, and/or text. Examples of image type data which may be used may include a video frame, LiDAR point cloud, an X-ray image, a computer tomography scan, a hyperspectral image, and/or various other types of images.

The training data 161 may be provided by the user computing device 110 and/or the server computing system 130. When the training computing device 150 trains the machine learning models 120 and/or 140 with respect to specific data of the user computing device 110, the machine learning models 120 and/or 140 may be characterized as a personalized model.

In addition, the model trainer 160 includes a computer logic utilized to provide a desired function.

Further, the model trainer 160 may be implemented as hardware, firmware, and/or software controlling a universal processor. In one implementation example, the model trainer 160 may include a program file stored in a storage device, and may be loaded to the memory 152 and executed by one or more processors 151. In another implementation example, the model trainer 160 includes one or more sets of computer-executable data 153 and instructions 154 stored in executable by a tangible computer-readable storage medium such as a RAM hard disk or an optical or magnetic medium.

The network 170 includes a 3rd Generation Partnership Project (3GPP) network, a Long Term Evolution (LTE) network, a World Interoperability for Microwave Access (WIMAX) network, Internet, a Local Area Network (LAN), Wireless Local Area Network (LAN), a Wide Area Network (WAN), a Personal Area Network (PAN), a Bluetooth network, a satellite broadcasting network, an analog broadcasting network, and/or a Digital Multimedia Broadcasting (DMB) network, but is not limited thereto.

In general, communication through the network 170 may be performed through various communication protocols (for example, TCP/IP, HTTP, SMTP, and/or FTP), encoding or formats (for example, HTML and/or XML), and/or protective schemas (for example, VPN, secure HTTP, and/or SSL) by using any type of wired and/or wireless communication.

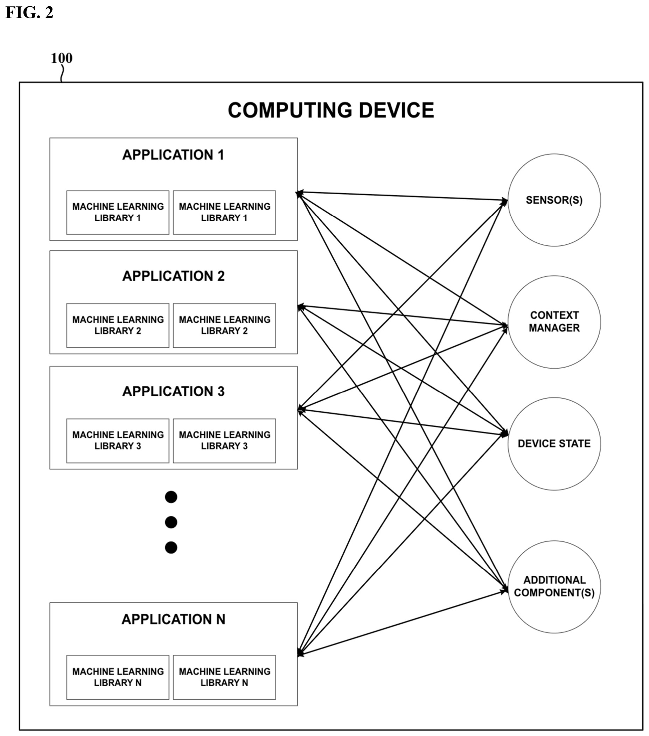

FIG. 2 illustrates an example block diagram illustrating a computing device implementing an outlier judgement guide and monitoring service according to an embodiment of the present disclosure.

Referring to FIG. 2, the computing device 100 included in the user computing device 110, the server computing system 130, and the training computing system 150 includes a plurality of applications (for example, application 1 to application N). Each application may include a machine learning library and at least one machine learning model. For example, the applications may include an image processing (for example, detection, classification and/or segmentation) application, a text messaging application, an e-mail application, a dictation application, a virtual keyboard application, a browser application, and a chat-bot application.

In an embodiment, the computing device 100 may include the model trainer 160 for training the artificial intelligence model, and may store and operate the trained artificial intelligence model to provide output data according to predetermined input data (in an embodiment, image data).

Each application of the computing device 100 may communicate with a number of other components of the computing device, such as, for example, one or more sensors, a context manager, a device state component, and/or additional components. In an embodiment, each application may communicate with each device component using an API (for example, a public API). In an embodiment, the API used by each application may be specific to the relevant application.

FIG. 3 illustrates an example block diagram illustrating another aspect of the computing device 100 implementing an outlier judgement guide and monitoring service according to an embodiment of the present disclosure.

Referring to FIG. 3, a computing device 300 includes a plurality of applications (for example, application 1 to application N). Each application is in communication with a central intelligence layer. For example, the applications may include an image processing application, a text messaging application, an e-mail application, a dictation application, a virtual keyboard application, and a browser application. In an embodiment, each application may communicate with the central intelligence layer (and model(s) stored therein) using an API (for example, a common API across all applications).

In addition, the central intelligence layer may include a plurality of machine learning models. For example, as illustrated in FIG. 3, a respective machine learning model and at least some thereof may be provided for each application and managed by the central intelligence layer. In other implementations, two or more applications may share a single machine leaning model. For example, in some implementations, the central intelligence layer may provide a single model for all of the applications. In some implementations, the central intelligence layer may be included within an operating system of the computing device 300 or implemented differently.

The central intelligence layer may communicate with a central device data layer. The central device data layer may be a centralized data storage for the computing device 300. As illustrated in FIG. 3, the central device data layer may communicate with a number of other components of the computing device 300, such as, for example, one or more sensors, a context manager, a device state component, and/or additional components. In some implementations, the central device data layer may communicate with each device component using an API (for example, a private API).

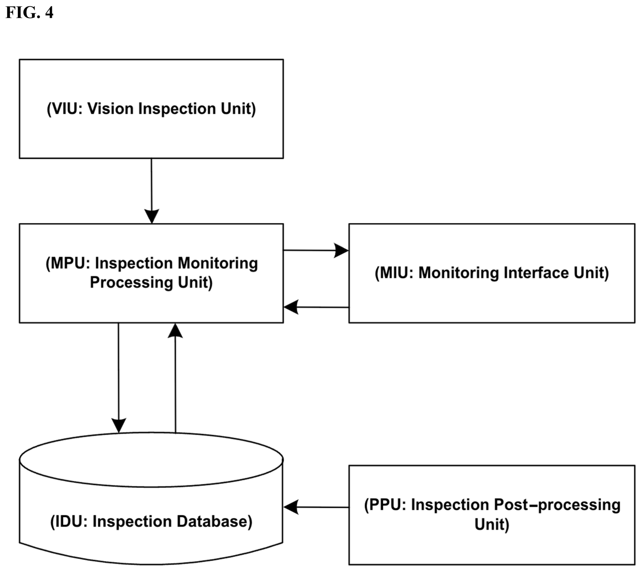

FIG. 4 illustrates an example block diagram illustrating the computing system 1000 according to another aspect of an embodiment of the present disclosure.

Referring to FIG. 4, the computing device 1000 according to an embodiment of the present disclosure in another aspect may include: at least one vision inspection unit (VIU), an inspection monitoring processing unit (MPU), an inspection database (IDU), a monitoring interface (I/F) unit (MIU), and/or an inspection post-processing unit (PPU).

Specifically, the VIU according to an embodiment may automatically determine the presence or absence of an outlier for a predetermined image (for example, a specific product image) based on a model (hereinafter, a defect judgment model) trained through various methodologies such as a predetermined deep learning and/or machine learning.

Herein, the detect judgement model according to an embodiment may include the outlier detection model according to an embodiment of the present disclosure.

In other words, the VIU according to an embodiment may perform the anomaly detection based on a predetermined image using the outlier detection model described below, and may automatically judge the presence or absence of an outlier for the corresponding image based on the result of the performed anomaly detection.

In this connection, in an embodiment, when the reliability of the outlier judgement result does not meet a preset reference, the VIU may provide the image (in other words, the image whose reliability of the outlier judgement result is less than or equal to a reference value) to the MPU according to an embodiment of the present disclosure.

In an embodiment, the VIU may calculate an error range of the outlier judgment result for a predetermined first image.

In addition, when the calculated error range does not meet a preset reference value (for example, within the allowable error range), the VIU may transmit the corresponding first image (in an embodiment, an inspection image) to the MPU.

In addition, in an embodiment, the MPU according to an embodiment may search and extract from the IDU according to an embodiment of the present disclosure at least one image (in an embodiment, a similarity image) having a similarity greater than or equal to a preset reference with an image (in an embodiment, the inspection image) received from the VIU.

In addition, the MPU may provide at least one extracted similarity image to the MIU according to an embodiment of the present disclosure.

In addition, in an embodiment, the MPU may receive and acquire various pieces of data (in an embodiment, data for judgement the presence or absence of an outlier) according to input from a predetermined first user (in an embodiment, a worker performing an outlier judgement) from the MIU.

In addition, the MPU may store and manage various pieces of data acquired from the MIU and/or the VIU in the IDU.

In addition, in an embodiment, the IDU may store and manage various pieces of data, information, and/or algorithms required for the outlier judgement guide and monitoring service according to an embodiment of the present disclosure.

In addition, the MIU according to an embodiment may display, output and provide various data pieces of and/or information related to the outlier judgment guide and monitoring service as a predetermined graphic image.

In an embodiment, the MIU may configure and provide a screen so that a predetermined first user (hereinafter, a worker) may check various pieces of data (in an embodiment, inspection images, similarity images, and/or judgment detailed information) received from the MPU.

In addition, in an embodiment, the MIU may provide various pieces of data based on the input of a worker (in an embodiment, an input of judgment on the presence or absence of an outlier for the inspection image) to the MPU.

In addition, the PPU according to an embodiment may update predetermined data and/or information stored in the IDU based on additional data (in an embodiment, judgment result feedback information) additionally acquired after the process for judgement the presence or absence of an outlier (in other words, a vision inspection process) according to an embodiment of the present disclosure is performed on a predetermined inspection image.

In an embodiment of the present disclosure of FIG. 4, in order to prevent the features according to an embodiment of the present disclosure from being blurred, the computing system 1000 is described as including components of the functional aspects described above.

However, it is obvious that a person skilled in the art may understand that, depending on embodiments, other general components may be included in addition to the components illustrated in FIG. 4, or some of the components illustrated in FIG. 4 may be omitted.

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein may be implemented using a single device or component or a plurality of devices or components working in combination. Databases and applications may be implemented on a single system or distributed across a plurality of systems. Distributed components may operate sequentially or in parallel.

[Outlier Dectection Model (ODM)]

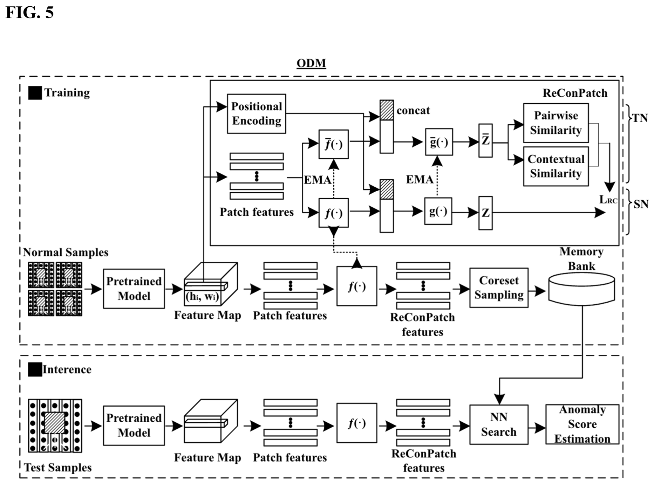

FIG. 5 is an example block flowchart illustrating the ODM according to an embodiment of the present disclosure.

Referring to FIG. 5, the ODM according to an embodiment of the present disclosure may refer to an image deep learning model that performs the anomaly detection based on a predetermined input image and classifies and/or recognizes the image based thereon.

Herein, for reference, the anomaly detection may refer to a process of identifying abnormal patterns, outliers, and/or exceptions from specific data.

In other words, the anomaly detection may be a process of detecting components that deviate from the attributes of normal data

In an embodiment, the anomaly detection may be implemented based on a method such as grouping predetermined data into clusters and considering points that deviate from the clusters as outliers.

Accordingly, in an embodiment, the ODM may determine whether a predetermined input image contains a specific abnormal attribute, and classify and/or recognize the image based on the determination result.

In detail, in an embodiment, the ODM may include a first network (TN: Teacher Network) and a second network (SN: Student Network).

In more detail, the first network (TN) according to an embodiment may mean a neural network that calculates a similarity between predetermined features (in an embodiment, patch features).

In an embodiment, the first network (TN) may include a first feature representation layer ($\bar{f}(\cdot)$) and a first spatial projection layer ($\bar{g}(\cdot)$).

Herein, the feature representation layer according to an embodiment may mean a layer that reconfigures (adjusts) the feature in a direction to improve the performance of a feature representation according to a predetermined feature (in an embodiment, the patch feature).

To this end, the feature representation layer may be trained to extract meaningful features from a predetermined feature (in an embodiment, the patch feature) with higher precision and reconfigure (adjust) the feature based thereon.

In addition, the spatial projection layer according to an embodiment may mean a layer that projects the feature representation according to a predetermined feature (in an embodiment, the patch feature) into a predetermined feature representation space.

In an embodiment, the spatial projection layer may be trained to project feature representations according to predetermined features (in embodiments, the patch features) into a feature representation space that may more effectively apply the goals of model learning.

The second network (SN) according to an embodiment may mean a neural network that implements feature representation learning.

For reference, the feature representation learning may refer to a process by which a deep learning model automatically detects and learns useful features from predetermined data.

Through the feature representation learning, the deep learning model may effectively encode useful information contained in data to generate meaningful features that may be used in various deep learning tasks, and may understand the complex structure and patterns of data and make more precise predictions based thereon.

In an embodiment, the second network (SN) implementing the feature representation learning may include a second feature representation layer ($f(\cdot)$) and a second spatial projection layer ($g(\cdot)$).

In this connection, the first feature representation layer ($\bar{f}$) and the second feature representation layer ($f(\cdot)$) and the first spatial projection layer ($\bar{g}(\cdot)$) and the second spatial projection layer ($g(\cdot)$) according to an embodiment are intended to distinguish and explain the feature representation layer and the spatial projection layer included in the first network (TN) and the feature representation layer and the spatial projection layer included in the second network (SN). Hence, the description of the feature representation layer and the spatial projection layer of the second network (SN) applies to the description of the feature representation layer and the spatial projection layer of the first network (TN) described above.

In addition, a more detailed description of the first network (TN) and the second network (SN) according to an embodiment will be described in the patch feature learning method for the anomaly detection described later.

In an embodiment, the ODM may perform various functional operations required for anomaly judgment guide and monitoring service and/or patch feature training service for the anomaly detection in conjunction with a pre-trained model to perform concept learning.

Herein, the pre-trained model according to an embodiment may be an image deep-learning model pre-trained to perform concept learning based on a predetermined training data set (for example, a predetermined natural image data set and/or a predetermined normal image data set).

For reference, the concept learning may mean a process of inferring general rules, concepts, or patterns from given data and classifying the same.

In other words, in an embodiment, the pre-trained model may be an image deep learning model that takes a predetermined image as input data, learns common features of objects or patterns in the input image, groups image components with similar features based thereon, and supports classifying or recognizing a specific image based thereon.

Specifically, the pre-trained model may: 1) extract a feature map for a predetermined input image.

In detail, the pre-trained model may automatically extract the feature map based on the raw pixel data of the input image using a predetermined image deep learning neural network (for example, a convolutional neural network (CNN)).

The feature map may represent various visual attributes of the image, such as edges, colors, and/or textures.

In addition, the pre-trained model may 2) perform clustering based on a feature space.

In detail, the pre-trained model may classify input images and/or objects within the input images into groups with similar features based on the feature map extracted as above.

In an embodiment, the pre-trained model may classify the extracted feature map according to the feature space using a predetermined clustering algorithm (for example, K-means, DBSCAN, and/or a hierarchical clustering algorithm) or dimensionality reduction algorithm (for example, t-SNE and/or UMAP).

In addition, the pre-trained model may 3) assign a label to each cluster.

In other words, the pre-trained model may define a concept (hypothesis) representing each cluster and set the same as a label for the cluster.

In this connection, the pre-trained model may train the features of images belonging to a specific concept or category by manually or semi-automatically assigning labels to each cluster.

In addition, the pre-trained model may 4) verify and adjust the assigned hypothesis.

In detail, the pre-trained model may verify the initially defined concepts (clustered feature groups) as described above and adjust the hypotheses when needed.

In this connection, the pre-trained model may perform a process of detecting and improving incorrectly clustered data using new image data.

In addition, the pre-trained model may 5) repeat the process described above.

In other words, the pre-trained model may be trained to continuously improve concepts related to the clustered features through new image data and additional feedback, and to classify or recognize images more precisely.

In this connection, in an embodiment, the pre-trained model may be directly included in the ODM, or may be implemented as a separate device and/or server from the ODM.

In the following description, the pre-trained model is described as being implemented as the ODM, but is not limited thereto.

In addition, in FIG. 5, in order to prevent the features according to an embodiment of the present disclosure from being blurred, the ODM is described as including the components as described above. However, it is obvious that a person skilled in the art may understand that, depending on embodiments, other general components may be included in addition to the components illustrated in FIG. 5, or some of the components illustrated in FIG. 5 may be omitted.

[Patch Feature Learning Method for Anomaly Detection]

Hereinafter, a method for implementing a patch feature training service for anomaly detection, in which the computing system 1000 according to an embodiment of the present disclosure performs patch feature-based learning for a predetermined pre-trained model based on an image data set for the outlier detection target, will be described in detail.

The patch feature learning method for the anomaly detection of the computing system 1000 according to an embodiment of the present disclosure may improve the performance and quality of various anomaly detection-based services by using the ODM trained according to an embodiment of the present disclosure.

In this connection, the patch feature learning method for the anomaly detection of the computing system 1000 according to an embodiment of the present disclosure may effectively provide the ODM with improved performance by performing the patch feature-based learning that reduces the distribution of mutually similar patch features and increases the difference between mutually heterogeneous patch features.

Hereinafter, the patch feature learning method for the anomaly detection according to an embodiment of the present disclosure will be described in more detail with reference to the attached drawings.

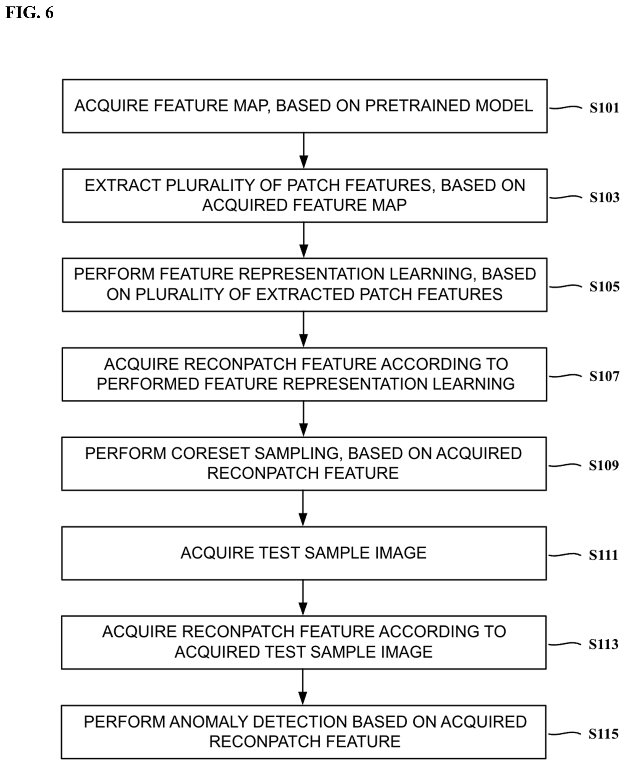

FIG. 6 is a flowchart illustrating a patch feature learning method for anomaly detection according to an embodiment of the present disclosure.

Referring to FIGS. 5 and 6, the patch feature learning method for the anomaly detection according to an embodiment of the present disclosure may include: acquiring a feature map based on a pre-trained model (S101); extracting a plurality of patch features based on the acquired feature map (S103); performing feature representation learning based on the extracted plurality of patch features (S105); acquiring a ReConPatch feature according to the performed feature representation learning (S107); performing coreset sampling based on the acquired ReConPatch feature (S109); acquiring a test sample image (S111); acquiring a ReConPatch feature according to the acquired test sample image (S113); and performing outlier detection based on the acquired ReConPatch feature (S115).

Specifically, the computing system 1000 according to an embodiment of the present disclosure may acquire the feature map based on the pre-trained model (S101).

In detail, in an embodiment, the computing system 1000 may acquire the feature map according to an image data set (hereinafter, a target image data set) for a predetermined outlier detection target through the pre-trained model to perform concept learning.

Herein, in other words, the pre-trained model according to an embodiment may be an image deep-learning model that is pre-trained to perform concept learning based on a predetermined training data set (for example, a predetermined natural image data set and/or a predetermined normal image data set).

In other words, in an embodiment, the computing system 1000 may acquire the feature map based on a predetermined target image data set (in other words, an image data set including a plurality of images for a predetermined outlier detection target) in conjunction with the pre-trained model as described above.

In detail, in an embodiment, the computing system 1000 may input the target image data set (for example, an image data set including a plurality of images of a predetermined electronic circuit element) into the pre-trained model.

Then, the pre-trained model may output the feature map according to the input target image data set and provide the same to the computing system 1000.

Thus, the computing system 1000 may acquire the feature map according to the target image data set.

In addition, in an embodiment, the computing system 1000 may extract the plurality of patch features based on the acquired feature map (S103).

Herein, the patch feature according to an embodiment may mean a feature extracted from a patch representing a small portion of a predetermined image.

Specifically, the patch may be a rectangular area representing a specific portion within a predetermined image. The patch may be viewed as a subset including some pieces of the information of the entire image, and may mainly contain local information or texture information.

In addition, the feature is feature information extracted from a predetermined image or patch, and may summarize or express important attributes of the image (for example, pattern, texture, color, and/or shape).

Accordingly, the patch feature may be data representing local attributes within a predetermined image in a patch unit.

In detail, in an embodiment, the computing system 1000 may extract the plurality of patch features based on the feature map acquired as above.

In more detail, in an embodiment, the computing system 1000 may divide a predetermined image including the target image data set (hereinafter, a target training image) into units of a predetermined patch size before inputting the target training image into the aforementioned pre-trained model.

In addition, the computing system 1000 may input each divided patch into the pre-trained model to acquire a corresponding feature map for each patch.

In other words, the computing system 1000 may acquire the feature map for each patch by dividing the target training image into units of a predetermined patch size and then inputting the same into the pre-trained model.

In this connection, according to an embodiment, the computing system 1000 may perform the coreset sampling on the acquired feature map for each patch.

Herein, for reference, the coreset sampling is one of the methods for efficiently processing large data sets, and may mean a process of extracting a set of representative samples that preserve the statistical characteristics or structure of the original data set as much as possible while reducing the size of the data set.

In an embodiment, the computing system 1000 may perform the coreset sampling using an approximate algorithm method that selects some samples that may represent the entire data set while maintaining the characteristics of the original data set within a predetermined error range by considering the distribution of given data.

Alternatively, the computing system 1000 may perform the coreset sampling using an importance sampling method that assigns a sampling probability based on the importance of each given data point and preferentially selects data points with high importance.

Thus, the computing system 1000 may acquire the plurality of patch features for which the coreset sampling has been performed.

In another embodiment, the computing system 1000 may acquire the feature map for the entire area of the target training image (hereinafter, an entire feature map).

In addition, the computing system 1000 may divide the acquired entire feature map into units of a predetermined patch size.

Thus, the computing system 1000 may extract the plurality of patch features from the target training image.

As such, in an embodiment, the computing system 1000 may extract the plurality of patch features according to the target training image in at least one of the aforementioned methods.

In addition, according to an embodiment, the computing system 1000 may extract each patch feature by aggregating surrounding feature vectors within a specific patch size.

Alternatively, depending on embodiments, the computing system 1000 may use pixel values themselves within each patch as features.

Alternatively, depending on embodiments, the computing system 1000 may use a statistical summary (for example, mean, distribution, and/or histogram) of pixel values within each patch as a feature.

Alternatively, according to an embodiment, the computing system 1000 may analyze the texture pattern within each patch and use the same as a feature. For example, the computing system 1000 may extract texture-based patch features using Gabor filters, Local Binary Patterns (LBP), and/or Histogram of Oriented Gradients (HOG) techniques.

Alternatively, according to an embodiment, the computing system 1000 may automatically learn and extract high-dimensional features within each patch using a deep learning algorithm such as a convolutional neural network (CNN) and use the same as features.

As such, the computing system 1000 in an embodiment may extract features at a patch level and support the outlier detection utilizing the same, thereby increasing processing efficiency in the data learning and analysis process and sensing abnormal local patterns that mainly appear in small portions within an image in more detail.

In addition, in an embodiment, the computing system 1000 may perform the feature representation learning based on a plurality of extracted patch features (S105).

Herein, in other words, the feature representation learning may mean a process in which a deep learning model (in an embodiment, the ODM) automatically detects and learns useful features from given data.

In detail, in an embodiment, the computing system 1000 may train a feature representation for the plurality of patch features extracted as described above based on the ODM according to an embodiment of the present disclosure.

In other words, the computing system 1000 may perform the feature representation learning for the ODM that performs the anomaly detection based on the extracted plurality of patch features.

Herein, in other words, the anomaly detection may refer to a process of identifying abnormal patterns, outliers, and/or exceptions from specific data, in other words, a process of detecting components that deviate from the attributes of normal data.

Accordingly, in an embodiment, the computing system 1000 may determine whether a predetermined input image includes a specific abnormal attribute, and perform the feature representation learning (in an embodiment, concept learning) to classify and/or recognize the image based on the determination result based on the plurality of patch features described above.

In this connection, in an embodiment, the computing system 1000 may perform the feature representation learning described above based on a semi-supervised learning method.

In other words, the computing system 1000 may build the ODM that implements semi-supervised anomaly detection based on semi-supervised learning.

Herein, for reference, the semi-supervised learning may mean a deep learning method that trains a model using not only data with labels (in other words, supervised data) but also data without labels (in other words, unsupervised data).

In general, when base data is collected for building an anomaly detection system, it is difficult to acquire a sufficient amount of abnormal data (for example, image data capturing an abnormal state of the outlier detection target) for smooth learning. Accordingly, there may be limitations in anomaly detection learning that aims to recognize abnormal states (outliers) of various shapes with high precision.

Accordingly, in an embodiment of the present disclosure, a semi-supervised learning-based anomaly detection is implemented by building the pre-trained model mainly using normal data (in an embodiment, image data capturing anormal state of the outlier detection target), and performing the outlier detection based on a pseudo label using the pre-trained model.

Herein, for reference, the pseudo label may refer to the label predicted by a model trained on unlabeled data.

The pseudo label may be used primarily when labeled data is limited or when large amounts of unlabeled data are additionally utilized to train a model.

Thus, in an embodiment, the computing system 1000 may easily achieve model learning and performance improvement for building an outlier detection process even when labeled data is relatively rare or diverse and thus limited.

In more detail, in an embodiment, the computing system 1000 may perform the feature representation learning according to the plurality of patch features based on the first network (TN) and the second network (SN) of the ODM.

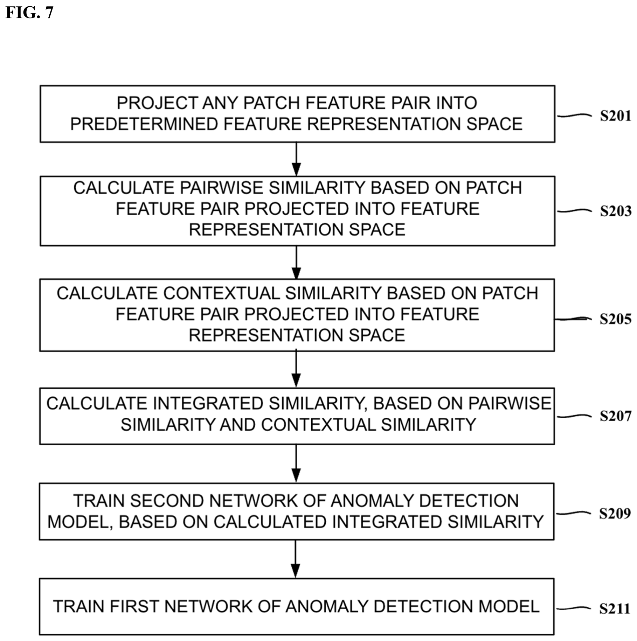

FIG. 7 is a flowchart illustrating a patch feature-based feature representation learning method according to an embodiment of the present disclosure.

Specifically, referring to FIG. 7, in an embodiment, the computing system 1000 may project any patch feature pair into a predetermined feature representation space (S201).

In detail, in an embodiment, the computing system 1000 may project a patch feature pair (hereinafter, a first patch feature pair) configured of a pair of any first patch feature ($p_i$) and a second patch feature ($p_j$) into a feature representation space.

In an embodiment, the computing system 1000 may represent a first patch feature ($p_i$) projected into the feature representation space as in [(a) of Equation 1] below, and may represent the second patch feature ($p_j$) projected into the feature representation space as in [(b) of Equation 1] below.

[Equation 1-(a)]

$$\overline{z_i} = \overline{g}(\overline{f}(\overline{p_i}))$$

[Equation 1-(b)]

$$\overline{z_j} = \overline{g}(\overline{f}(\overline{p_j}))$$

In addition, in an embodiment, the computing system 1000 may calculate a pairwise similarity based on the patch feature pair projected into the feature representation space (S203).

Herein, the pairwise similarity according to an embodiment may mean data measuring the similarity between the first patch feature ($p_i$) and the second patch feature ($p_j$) included in any patch feature pair.

In other words, in an embodiment, the computing system 1000 may measure the pairwise similarity indicating similarity between the first patch feature ($p_i$) and the second patch feature ($p_j$) included in the first patch feature pair.

In this connection, the computing system 1000 as an embodiment may calculate the pairwise similarity described above according to [Equation 2] below.

[Equation 2]

$$\omega_{ij}^{Pairwise} = e^{-(\|\overline{z}_i - \overline{z}_j\|_2^2)/\sigma}$$

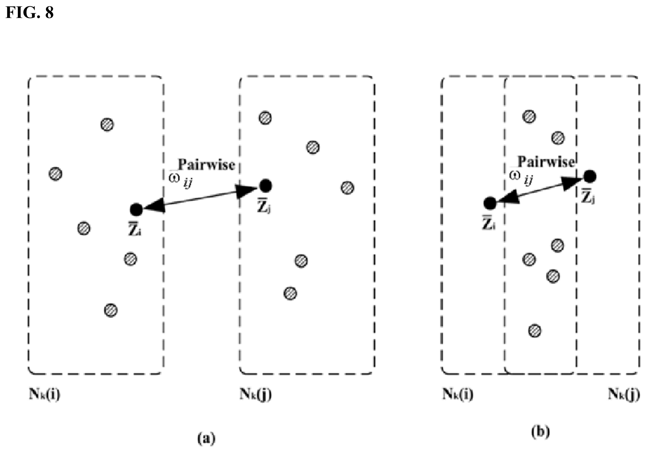

FIG. 8 is an example diagram illustrating an example of measuring similarity between patch features according to an embodiment of the present disclosure.

However, referring to FIG. 8, when similarity is measured only for the relationship between the first patch feature ($p_i$) and the second patch feature ($p_j$) included in any patch feature pair, the pairwise similarity is the same, but the discrimination precision may be reduced in cases where the first feature and the second feature need to be classified with different labels (in other words, the case where the first feature and the second feature need to be further apart from each other to get closer to the correct label), as in (a) of FIG. 8, and in cases where the first feature and the second feature need to be classified with the same label (in other words, the case where the first feature and the second feature need to be closer to each other to get closer to the correct label), as in (b) of FIG. 8.

In other words, when only the pairwise similarity is measured, label prediction may be performed without considering the mutual similarity in a group relationship including K-nearest neighbors <$N_k(i)$> for the first patch feature ($p_i$) and K-nearest neighbors ($N_k(j)$) for the second patch feature ($p_j$), which may result in a decrease in precision.

Thus, in an embodiment, the computing system 1000 may calculate contextual similarity based on the patch feature pair projected into the feature representation space (S205).

Herein, the contextual similarity according to an embodiment may mean data measuring the bidirectional similarity between the K-nearest neighbors <$N_k(i)$> for the first patch feature ($p_i$) and the K-nearest neighbors ($N_k(j)$) for the second patch feature ($p_j$) included in any patch feature pair.

In this connection, in an embodiment, the bidirectional similarity may be calculated based on the average similarity between K-nearest neighbor <$N_k(i)$> features for the first patch feature ($p_i$) and K-nearest neighbor <$N_k(j)$> features for the second patch feature ($p_j$).

In detail, in an embodiment, the computing system 1000 may calculate the contextual similarity described above according to a K-nearest neighbor (K-NN) algorithm that performs prediction based on the distance between data points as in [Equation 3] below and [Equation 4].

[Equation 3]

$$\omega_{ij}^{\sim Contextual} = (|N_k(i) \cap N_k(j)| / |N_k(i)|), \quad \text{if } j \in N_k \text{; 0, otherwise}$$

[Equation 4]

$$R_k(i) = \{j | j \in N_k(i) \text{ and } i \in N_k(j)\}$$

$$\omega_{ij}^{\wedge Contextual} = (1/|R_{k/2}(i)|) \sum_{l \in R_{k/2}(i)} \omega_{lj}^{\sim Contextual}$$

In other words, in an embodiment, the computing system 1000 may calculate the contextual similarity that considers a context similarity to be higher the more common nearest neighbors the first patch feature ($p_i$) and the second patch feature ($p_j$) included in a first patch feature pair share.

As such, the computing system 1000 may learn the feature representation in the group relationship including the first patch feature ($p_i$) and the second patch feature ($p_j$) and reflect the same in a pseudo-label prediction process.

In other words, the computing system 1000 extracts the K-nearest feature samples of the first patch feature ($p_i$) and the second patch feature ($p_j$), calculates the context similarity that measures how many samples intersect, and uses the same together with the pairwise similarity to train the ODM, thereby enabling the trained ODM to extract features of better quality.

Thus, the computing system 1000 may more precisely determine whether the pairwise similarity between the first feature and the second feature is the same, but the first feature and the second feature need to be classified into different labels (in other words, the case where the first feature and the second feature need to be further apart from each other to get closer to the correct label) or whether the first feature and the second feature need to be classified into the same label (in other words, the case where the first feature and the second feature need to be closer to each other to get closer to the correct label), and reflect the same in predicting a pseudo label. Accordingly, the computing system 1000 may directly improve the task processing quality and performance of the ODM that performs semi-supervised learning-based anomaly detection.

Returning again, in an embodiment, the computing system 1000 may also calculate the integrated similarity based on the pairwise similarity and contextual similarity calculated as above (S207).

Herein, the integrated similarity according to an embodiment may mean data that combines the pairwise similarity and contextual similarity between the first patch feature ($p_i$) and the second patch feature ($p_j$) included in any patch feature pair.

In detail, in an embodiment, the computing system 1000 may linearly combine the pairwise similarity and contextual similarity between the first patch feature ($p_i$) and the second patch feature ($p_j$) included in the first patch feature pair according to [Equation 5] as follows.

[Equation 5]

$$\omega_{ij}^{Contextual} = (1/2)(\hat{\omega}_{ij}^{Contextual} + \hat{\omega}_{ji}^{Contextual}).$$

$$\omega_{ij} = \alpha \cdot \omega_{ij}^{Pairwise} + (1-\alpha) \cdot \omega_{ij}^{Contextual}.$$

In this connection, the integrated similarity according to an embodiment may be defined as a linear combination of two similarities satisfying "$\alpha \in [0,1]$."

In addition, in an embodiment, the computing system 1000 may train the second network (SN) of the ODM based on the calculated integrated similarity (S209).

In other words, in an embodiment, the computing system 1000 may perform the second network (SN) learning that implements the feature representation learning using the integrated similarity.

In detail, in an embodiment, the computing system 1000 may train the second network (SN) by applying the calculated integrated similarity for the first patch feature pair to a relaxation contrast loss ($L_{RC}$).

Herein, the relaxation contrast loss ($L_{RC}$) according to an embodiment is as shown in [Equation 6] below.

[Equation 6]

$$L_{RC}(z) = (1/N) \sum_{i=1}^{N} \sum_{j=1}^{N} [\omega_{ij}(\delta_{ij})^2] + (1/N) \sum_{i=1}^{N} \sum_{j=1}^{N} [(1-\omega_{ij}) * \max(m-\delta_{ij}, 0)^2].$$

Herein, "$z$" in [Equation 6] may be an embedding vector inferred by "$g(f(p))$," "$N$" may be the number of mini-batch, in other words, patch instances, "$m$" may be a repelling margin, and "$\omega_{ij}$" may be a parameter that determines the weights of attraction and repelling loss terms.

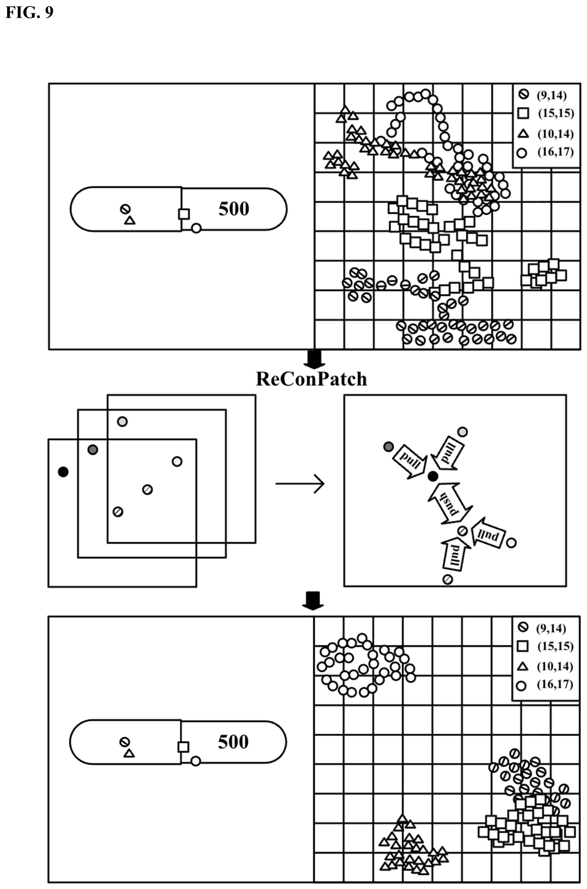

FIG. 9 is an example diagram illustrating an application example of a ReConPatch process according to an embodiment of the present disclosure.

In this connection, referring to FIG. 9, in an embodiment, when it is determined through the integrated similarity that the first patch feature ($p_i$) and the second patch feature ($p_j$) are the patch feature pair (hereinafter, a positive feature pair) that need to be classified with different labels, the computing system 1000 may train the second feature representation layer ($f(\cdot)$, an embedding function) of the second network (SN) to map the first patch feature ($p_i$) and the second patch feature ($p_j$) included in the positive feature pair while separating the same from each other in the feature representation space.

In an embodiment, when it is determined through integrated similarity that the first patch feature ($p_i$) and the second patch feature ($p_j$) are the patch feature pair (hereinafter, a voice feature pair) that needs to be classified with the same label, the computing system 1000 may train the second feature representation layer ($f(\cdot)$, the embedding function) of the second network (SN) to map the first patch feature ($p_i$) and the second patch feature ($p_j$) included in the voice feature pair by making the same mutually accessible in the feature representation space.

As such, in an embodiment, the computing system 1000 may train the second feature representation layer ($f(\cdot)$) to reduce the distribution of similar patch features and increase the difference of heterogeneous patch features.

In other words, the computing system 1000 may train the second feature representation layer ($f(\cdot)$) to extract any patch feature in a form closer to a correct pseudo-label.

As such, in an embodiment, the computing system 1000 may directly improve the feature representation performance of the ODM itself by training the second feature representation layer ($f(\cdot)$) to more precisely extract meaningful features from any patch feature, and at the same time, may also improve the processing quality of various tasks (such as the anomaly detection in an embodiment) based thereon.

In addition, in an embodiment, the computing system 1000 that trains the second network (SN) based on the integrated similarity may 6) train the first network (TN) of the ODM.

In detail, in an embodiment, the computing system 1000 may gradually distill data according to the parameter ($\theta_{f,g}$) of the second network (SN) into data according to the parameter ($\theta_{f,g}$) of the first network (TN) according to the following [Equation 7] using an exponential moving average (EMA) method.

$$[\text{Equation 7}]$$

$$\theta_{\overline{f,g}} \leftarrow \gamma \cdot \theta_{\overline{f,g}} + (1-\gamma) \cdot \theta_{f,g}$$

In other words, in an embodiment, the computing system 1000 may perform the first network (TN) learning of the ODM by gradually distilling information learned in the second network (SN) into the first network (TN) according to the aforementioned [Equation 7].

In this connection, in an embodiment, the computing system 1000 may perform the first network (TN) learning described above by further applying an update speed control variable, which is a variable that controls the speed of information distillation.

Thus, in an embodiment, the computing system 1000 may implement the feature representation learning based on the plurality of patch features based on the first network (TN) and the second network (SN) of the ODM.

As such, in an embodiment, the computing system 1000 may perform a process (in an embodiment, the ReConPatch process) of building a discriminant feature for the outlier detection by distilling the main features of the data set for the outlier detection target into the pre-trained model based on semi-supervised learning as described above.

Thus, the computing system 1000 may build a high-performance ODM that is trained to classify features corresponding to a predetermined patch level into correct pseudo-labels more precisely.

Accordingly, the computing system 1000 may directly and effectively improve the processing performance and quality of various tasks (in an embodiment, the anomaly detection) using the ODM.

In addition, in an embodiment, the computing system 100 may perform the coreset sampling based on the acquired ReConPatch features (S109).

Herein, in other words, the coreset sampling according to an embodiment may mean a process of extracting a set of representative samples that preserve the statistical characteristics or structure of the original data set as much as possible while reducing the size of the data set, as one of the methods for efficiently processing a large data set.

In detail, as an embodiment, the computing system 1000 may perform the coreset sampling using an approximate algorithm method that selects some samples that may represent the entire ReConPatch learning data set while maintaining the characteristics of the original ReConPatch learning data set within a predetermined error range by considering the distribution of the acquired ReConPatch learning data set.

In another embodiment, the computing system 1000 may perform the coreset sampling using an importance sampling method that assigns a sampling probability based on the importance of each piece of acquired ReConPatch feature data and preferentially selects data points with high importance.

Thus, the computing system 1000 may acquire the ReConPatch learning data set (hereinafter, a ReConPatch sampling data set) on which the coreset sampling has been performed.

In addition, in an embodiment, the computing system 1000 may store and manage the acquired ReConPatch sampling data set on a predetermined database.

Thus, the computing system 1000 may sense outliers with high precision while reducing data processing costs.

In addition, in an embodiment, the computing system 1000 may acquire the test sample image (S111).

Herein, the test sample image according to an embodiment may mean an image for which the presence or absence of an outlier is to be detected, in other words, image data that captures the outlier detection target.

In detail, in an embodiment, the computing system 1000 may acquire the test sample image as described above based on a predetermined user input and/or connection with an external server.

In addition, in an embodiment, the computing system 1000 may acquire the ReConPatch feature according to the acquired test sample image (S113).

Hereinafter, any content that overlaps with the above description may be summarized or omitted.

In detail, in an embodiment, the computing system 1000 may input the acquired test sample images into the pre-trained model.

In addition, in an embodiment, the computing system 1000 may acquire the feature map for the test sample image from the pre-trained model that has received the test sample image as input. A detailed description thereof applies the description of S101 described above.

In addition, in an embodiment, the computing system 1000 may extract the plurality of patch features based on the acquired feature map. A detailed description thereof applies the description of S103 described above.

In addition, in an embodiment, the computing system 1000 may input the extracted plurality of patch features into the ReConPatch layer described above.

As such, the ReConPatch layer may output a plurality of ReConPatch features according to the plurality of input patch features.

Thus, in an embodiment, the computing system 1000 may acquire a ReConPatch feature data set (hereinafter, a ReConPatch target data set) in a form that reduces the distribution of similar patch features and increases the difference of heterogeneous patch features for the plurality of input patch features.

In addition, in an embodiment, the computing system 1000 may perform the outlier detection based on the acquired ReConPatch features (S115).

In other words, in an embodiment, the computing system 1000 may perform the outlier detection for the test sample image based on the ReConPatch sampling data set acquired based on each training image used for learning and the ReConPatch target data set acquired based on the test sample image.

In other words, in an embodiment, the computing system 1000 may perform the anomaly detection on the test sample image based on the ReConPatch sampling data set and the ReConPatch target data set.

In detail, in an embodiment, the computing system 1000 may calculate the similarity (hereinafter, outlier detection similarity) between at least a portion of the ReConPatch sampling data set stored in the database and the ReConPatch target data set.

In addition, in an embodiment, the computing system 1000 may generate an anomaly score map based on the calculated outlier detection similarity.

Herein, for reference, the anomaly score map may mean an indicator that indicates how much the state deviates from a predetermined normal state based on the value (score) assigned by a model.

In addition, in an embodiment, the computing system 1000 may determine that the higher the score according to the generated anomaly score map, the closer the test sample image is to an abnormal state, and the lower the score according to the anomaly score map, the closer the test sample image is to a normal state.

Thus, in an embodiment, the computing system 1000 may perform the outlier detection on the test sample image.

As described above, in an embodiment of the present disclosure, the computing system 1000 performs a process (in an embodiment, the ReConPatch process) of building a discriminant feature for the outlier detection by distilling the main features of the data set for the outlier detection target into the pre-trained model based on semi-supervised learning as described above, and may perform the anomaly detection using the ODM trained therethrough.

Thus, in an embodiment, the computing system 1000 may directly and significantly improve the outlier detection performance and quality based on the ODM according to an embodiment of the present disclosure.

Hereinabove, the patch feature learning method and system for anomaly detection according to an embodiment of the present disclosure performs the patch feature-based learning for a predetermined pre-trained model based on the image data set for the outlier detection target, thereby performing more efficient data processing and providing the ODM that further improves task processing performance and quality for the anomaly detection.

In addition, the patch feature learning method and system for anomaly detection according to an embodiment of the present disclosure performs the patch feature-based learning that reduces the distribution of mutually similar patch features and increases the difference between mutually heterogeneous patch features, thereby improving the precision and efficiency of anomaly detection even in a limited learning environment, and at the same time, enhancing task processing performance accordingly.

[Method for Monitoring Judgment Records for Outlier Judgment Guide]

Hereinafter, a method in which the computing system 1000 according to an embodiment of the present disclosure implements an outlier judgment guide and a monitoring service that provide a guide for judging an outlier in real time based on past outlier judgement records will be described in detail.

The method for monitoring judgement records for an outlier judgement guide of the computing system 1000 according to an embodiment of the present disclosure may detect at least one image (in an embodiment, a similarity image) similar to an image for which the presence or absence of an outlier is to be determined (in an embodiment, a test image) from the past outlier judgement records, and may display, output and provide various pieces of data related to the detected similarity image and the presence or absence of outliers previously determined therefor as a predetermined graphic image.

In this connection, the method for monitoring the judgement records for the outlier judgement guide of the computing system 1000 according to an embodiment of the present disclosure may improve data processing efficiency for detecting the aforementioned inspection image and/or similarity image, while enhancing precision and reliability thereof, by utilizing the ODM trained according to an embodiment of the present disclosure.

Hereinafter, the method for monitoring the judgement records for the outlier judgement guide according to an embodiment of the present disclosure will be described in more detail with reference to the accompany drawings.

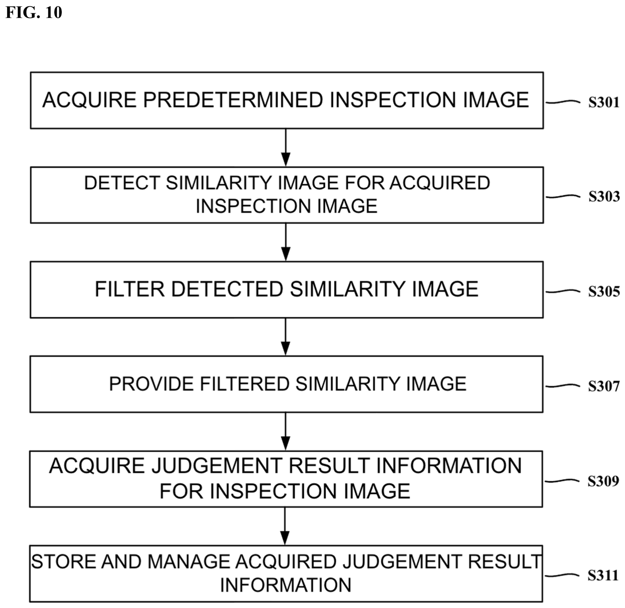

FIG. 10 is a flowchart illustrating a method for monitoring judgment records for an outlier judgment guide according to an embodiment of the present disclosure.

Referring to FIG. 10, the method for monitoring the judgement records for the outlier judgement guide according to an embodiment of the present disclosure may include: acquiring a predetermined inspection image (S301); detecting a similarity image for the acquired inspection image (S303); filtering the detected similarity image (S305); providing the filtered similarity image (S307); acquiring judgement result information for the inspection image (S309); and storing and managing the acquired judgement result information (S311).

Specifically, the computing system 1000 according to an embodiment of the present disclosure may acquire the predetermined inspection image (S301).

Herein, the inspection image according to an embodiment of the present disclosure may be a target image for which the presence or absence of an outlier is to be judged manually.

In other words, the inspection image may be image requiring manual work by a worker to judge the presence or absence of an outlier.

In detail, the computing system according to an embodiment may acquire the aforementioned inspection image in conjunction with the VIU.

More specifically, the VIU according to an embodiment may automatically determine the presence or absence of an outlier for a predetermined image (for example, a specific product image) using the aforementioned defect judgement model.

Herein, the detect judgement model according to an embodiment may include the aforementioned ODM.

In other words, the VIU according to an embodiment may perform the anomaly detection based on a predetermined image using the ODM described above, and may automatically judge the presence or absence of an outlier for the corresponding the image based on the result of the performed anomaly detection.

In this connection, in an embodiment, when the reliability of the outlier judgement result does not meet a preset reference, the VIU may provide the image (in other words, the image whose reliability of the outlier judgement result is less than or equal to a reference value) as a separate output.

In an embodiment, the VIU may calculate an error range of the outlier judgment result for a predetermined first image.

In addition, when the calculated error range does not meet a preset reference value (for example, within the allowable error range), the VIU may output the corresponding first image (in an embodiment, an inspection image) separately and provide the same to the computing system 1000.

Thus, in an embodiment, the computing system 1000 may acquire an inspection image to be provided to a worker to manually judge the presence or absence of an outlier.

In addition, in an embodiment, the computing system 1000 may detect the similarity image for the acquired inspection image (S303).

Herein, the similarity image according to an embodiment of the present disclosure may mean an image among the overkill images stored in the IDU that has a similarity greater than or equal to a preset reference with the aforementioned inspection image.

In this connection, the overkill image according to an embodiment may mean an inspection image for which the presence or absence of an outlier was manually judged in the past.

In other words, the overkill image may be an inspection image for which the presence or absence of an outlier was previously judged by a specific worker before the current point in time.

In an embodiment, the overkill image may include detailed judgment information corresponding to the corresponding overkill image.

Herein, the detailed judgment information according to an embodiment may mean a judgment content of the presence or absence of an outlier for a predetermined inspection image (herein, an overkill image), in other words, information including various pieces of metadata related to the judgement on the presence or absence of an outlier.

In an embodiment, the detailed judgment information may include worker-in-charge information, judgment result information, judgment result feedback information, and/or defect type information.

Herein, the worker-in-charge information according to an embodiment may be information specifying the worker who performed the judgement on the presence or absence of an outlier for a predetermined inspection image (herein, the overkill image).

In an embodiment, the worker-in-charge information may include a worker name, position, career history, and/or proficiency information.

Herein, the proficiency information according to an embodiment may be information specifying the proficiency of a worker in performing manual vision inspection based on the inspection image (in other words, manually judging the presence or absence of an outlier for the inspection image).

In other words, the proficiency information may be information indicating the precision of the judgement on the presence or absence of an outlier performed by the worker in a predetermined manner.

In an embodiment, the computing system 1000 may calculate an error rate for the judgment results of the worker to acquire the proficiency information described above.

Specifically, the computing system 1000 may calculate the error rate (for example, a predetermined percentage (%)) for the judgment result of the worker based on the judgment result information of the worker and the matching judgment result feedback information.

Furthermore, the computing system 1000 may specify the proficiency information of the worker based on the calculated error rate.

In this connection, the judgment result information according to an embodiment may be information specifying the judgment result on the presence or absence of an outlier performed by a worker-in-charge in a predetermined inspection image (herein, the overkill image).

In an embodiment, the judgment result information may be OK (in other words, no outlier) or NG (in other words, the presence of an outlier).

Furthermore, the judgment result feedback information according to an embodiment may be information determining whether the judgment result information of a predetermined inspection image (herein, the overkill image) is correct or incorrect.

In other words, the judgment result feedback information may be information determining whether the judgment result of a predetermined inspection image (herein, the overkill image) performed by the worker-in-charge is correct or incorrect.

In an embodiment, the computing system 1000 may acquire the judgment result feedback information described above in conjunction with a predetermined user input and/or an external server (for example, a defective product management server).

The computing system 1000 may then match the acquired judgment result feedback information to a corresponding overkill image and store and manage the same in the IDU.

Furthermore, the defect type information according to an embodiment may be information specifying a specific defect type (for example, a specific part absence) included in a predetermined inspection image (herein, the overkill image).

In an embodiment, the defect type information may be set based on input from a predetermined user (in an embodiment, a worker who performed the judgment on the presence or absence of an outlier for the corresponding overkill image).

Returning to FIG. 10, in a detailed embodiment, the computing system 1000 may detect at least one similarity image for the inspection image acquired as described above from the IDU in conjunction with the MPU.

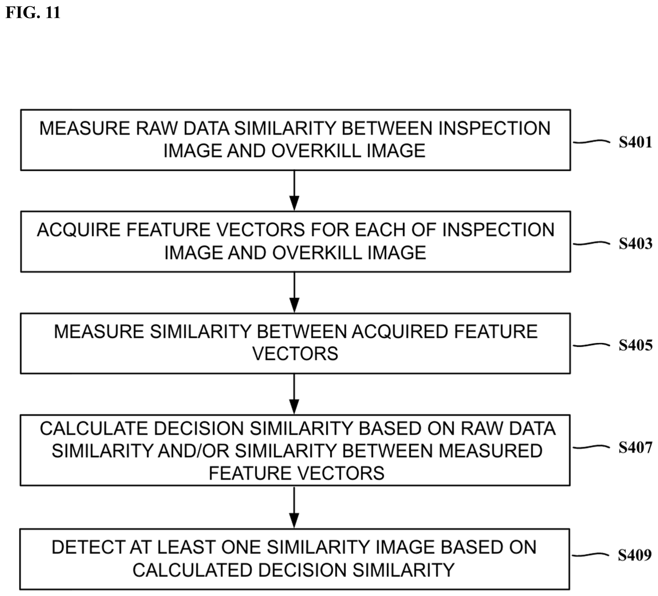

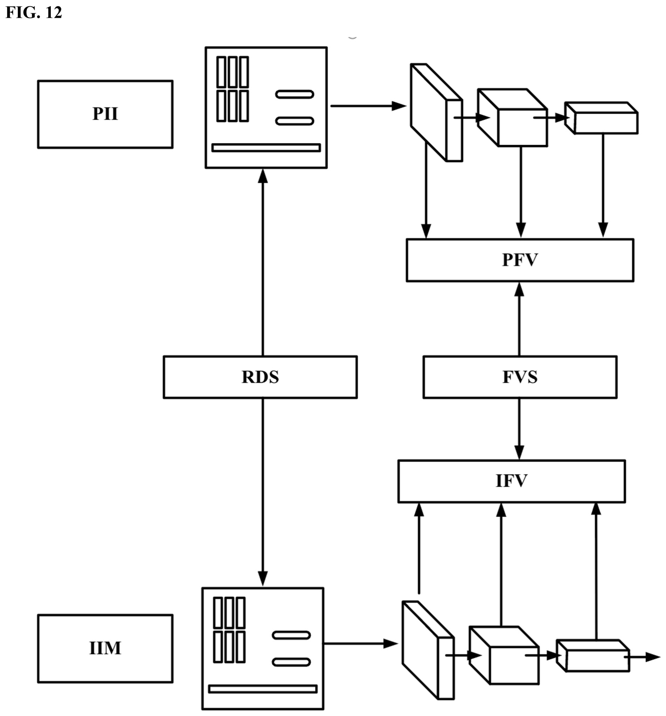

FIG. 11 is a flowchart illustrating a method for detecting similarity images according to an embodiment of the present disclosure. FIG. 12 is a conceptual diagram illustrating a method for detecting similarity images according to an embodiment of the present disclosure.

More specifically, referring to FIGS. 11 and 12, in an embodiment, the computing system 1000 may measure a raw data similarity (RDS) between the inspection image (IIM) and the overkill image (PII) (S401).

Herein, for reference, the RDS may mean information that quantitatively measures the similarity between individual data points within a given data set (in an embodiment, a data set including the inspection image (IIM) and at least one overkill image (PII)).

In an embodiment, the computing system 1000 may measure the RDS between the inspection image (IIM) and the overkill image (PII) using an RDS measurement index such as the structural similarity index measure (SSIM), mean square error (MSE), Euclidean distance, cosine similarity, Jaccard similarity, Pearson correlation coefficient and/or Manhattan distance.

In addition, in an embodiment, the computing system 1000 may acquire feature vectors for each of the inspection image (IIM) and the overkill image (PII) (S403).

In detail, in an embodiment, the computing system 1000 may acquire a feature vector (IFV: hereinafter, an inspection feature vector) for the inspection image (IIM) and a feature vector (PFV: hereinafter, an overkill feature vector) for the overkill image (PII) by linking with a deep learning model (hereinafter, the image feature extraction model) that uses a predetermined image as input data and a feature vector according to the input image as output data.

Herein, in an embodiment, the image feature extraction model may be a deep learning model (hereinafter, a first feature extraction model) including a convolutional neural network (CNN) pre-trained based on a predetermined image data set (for example, a natural image data set such as ImageNet, COCO (Common Objects in Context), and/or PASCAL VOC) that is unrelated to the inspection image (IIM).

In another embodiment, the image feature extraction model may be a deep learning model (hereinafter, a second feature extraction model) including the CNN pre-trained based on a predetermined image data set (for example, an image data set including a plurality of the overkill images (PII)) specialized for judging the presence or absence of an outlier for the inspection image (IIM).

In this connection, depending on an embodiment, the image feature extraction model may include the ODM (hereinafter, a third feature extraction model) pre-trained using a predetermined image data set (in an embodiment, the target image data set) specialized for judging the presence or absence of an outlier for the inspection image (IIM).

More specifically, in an embodiment, the computing system 1000 may acquire the inspection feature vector (IFV) and the overkill feature vector (PFV) described above in conjunction with the first feature extraction model and/or the second feature extraction model.

Specifically, the computing system 1000 may input the inspection image (IIM) and the overkill image (PII) into the first feature extraction model and/or the second feature extraction model.

Then, the first feature extraction model and/or the second feature extraction model may extract and output feature vectors for each of the input inspection image (IIM) and the overkill image (PII).

Thus, the computing system 1000 may acquire the inspection feature vector (IFV) and the overkill feature vector (PFV) from the first feature extraction model and/or the second feature extraction model.

In another embodiment, the computing system 1000 may acquire the inspection feature vector (IFV) and the overkill feature vector (PFV) described above in conjunction with the third feature extraction model (in other words, the ODM).

Hereinafter, any details overlapping with the above description may be summarized or omitted.

In detail, in an embodiment of the present disclosure , the computing system 1000 may input the inspection image (IIM) and the overkill image (PII) to the third feature extraction model.

Accordingly, the third feature extraction model may acquire a feature map based on the aforementioned pre-trained model for each of the input inspection image (IIM) and the overkill image (PII).

In addition, the third feature extraction model may input the feature map of the acquired inspection image (IIM) (hereinafter, an inspection feature map) and the feature map of the overkill image (PII) (hereinafter, an overkill feature map) into the aforementioned ReConPatch layer.

Accordingly, the third feature extraction model may acquire a ReConPatch feature data set (hereinafter, a ReConPatch inspection data set) based on the inspection feature map and a ReConPatch feature data set (hereinafter, a ReConPatch overkill data set) based on the overkill feature map from the ReConPatch layer.

In this connection, depending on an embodiment, the third feature extraction model may perform the coreset sampling based on the ReConPatch inspection data set and/or the ReConPatch overkill data set.

Thus, the third feature extraction model may acquire the inspection feature vector (IFV) based on the acquired ReConPatch inspection data set and the overkill feature vector (PFV) based on the ReConPatch overkill data set.

As such, depending on an embodiment, the computing system 1000 may acquire a feature vector based on the ODM with improved performance through learning optimized for anomaly detection.

Accordingly, the computing system 1000 may measure the similarity between the images by utilizing feature vectors extracted with higher precision from the feature data of each of the inspection image (IIM) and the overkill image (PII).

Accordingly, the computing system 1000 may further improve the quality of the similarity image determined later based on the measured similarity.

Furthermore, in an embodiment, the computing system 1000 may measure the similarity between the acquired feature vectors (S405).

In other words, the computing system 1000 may measure the similarity (distance) between the test feature vector (IFV) and the overkill feature vector (PFV) acquired as described above.

In an embodiment, the computing system 1000 may measure the similarity (FVS: hereinafter, a feature vector similarity) between the inspection feature vector (IFV) and the overkill feature vector (PFV) using measurement indicators such as a cosine similarity, L1 distance, L2 distance, and/or earth mover distance.

Furthermore, in an embodiment, the computing system 1000 may calculate a decision similarity based on the measured FVS and/or RDS (S407).

Herein, the decision similarity according to an embodiment may mean the final similarity that specifies the degree of similarity between the inspection image (IIM) and the overkill image (PII).

In detail, in an embodiment, the computing system 1000 may calculate the decision similarity by combining the aforementioned FVS and RDS in a predetermined manner.

In an embodiment, the computing system 1000 may compute a predetermined weighted sum based on the FVS and the RDS, and may calculate the decision similarity based thereon.

Alternatively, in an embodiment, the computing system 1000 may select either the FVS or the RDS to estimate the decision similarity.

In other words, depending on an embodiment, the computing system 1000 may estimate the decision similarity solely using either the FVS or the RDS.

Furthermore, in an embodiment, the computing system 1000 may detect at least one similarity image based on the calculated decision similarity (S409).

More specifically, in an embodiment, the computing system 1000 may compare the calculated decision similarity with a preset threshold (hereinafter, a similarity reference threshold).

In this connection, when the decision similarity is greater than or equal to the similarity reference threshold, the computing system 1000 may determine that the corresponding inspection image (IIM) and the overkill image (PII) are similar to each other.

In other words, when the decision similarity is greater than or equal to the similarity reference threshold, the computing system 1000 may detect the matching overkill image (PII) as the similarity image.

In contrast, in an embodiment, the computing system 1000 may determine that the corresponding inspection image (IIM) and the overkill image (PII) are different when the decision similarity is less than the similarity reference threshold.

In other words, when the decision similarity is less than the similarity reference threshold, the computing system 1000 may exclude the matching overkill image (PII) from the similarity image.

Accordingly, in an embodiment, the computing system 1000 may detect at least one similarity image based on the decision similarity.

In other words, in an embodiment, the computing system 1000 may detect at least one image among the overkill images (PII) stored in the IDU that has a similarity with the inspection image (IIM) greater than or equal to a preset reference as the similarity image.

Returning to FIG. 10, in another embodiment, the computing system 1000 may filter the detected similarity images (S305).

In detail, in an embodiment, the computing system 1000 may acquire a user input that sets whether to perform filtering on at least one detected similarity image.

In this connection, in an embodiment, when a user input that sets whether to perform similarity image filtering is acquired, the computing system 1000 may perform a filtering process on at least one similarity image.

More specifically, in an embodiment, the computing system 1000 may perform the aforementioned similarity image filtering process based on preset filtering conditions.

Herein, the filtering conditions according to an embodiment may include a condition where the skill level of a worker who judged whether a predetermined similarity image has an outlier is less than or equal to a preset reference value (in other words, skill level information matching the corresponding similarity image is less than or equal to a preset reference value).

Furthermore, the filtering conditions may include a condition where the judged outlier for a given similarity image is incorrect (in other words, the judgement result feedback information matching the corresponding similarity image is incorrect).

Furthermore, the filtering conditions may include a condition where the similarity image search conditions set by a user are not satisfied.

Herein, the similarity image search conditions according to an embodiment may include conditions for matching specific defect types, conditions for matching specific workers, and/or conditions for matching specific equipment (for example, a specific camera sensor).

Furthermore, in an embodiment, the computing system 1000 may perform filtering to remove the corresponding similarity image when the filtering conditions described above are satisfied.

As such, in an embodiment, the computing system 1000 may perform filtering to exclude images among the similarity images detected from a search database that do not meet user needs or whose reliability of quality is less than or equal to a reference value.

Thus, the computing system 1000 may implement the outlier judgment guide and the monitoring service that efficiently selects and utilizes more meaningful data.

In an embodiment, the computing system 1000 may determine whether the number of at least one similarity image detected and/or filtered as described above (hereinafter, the number of detected similarity images) exceeds a preset number (N: hereinafter, the minimum number of detected images).

Herein, the minimum number of detected images (N) according to an embodiment may be manually set based on user input or automatically set based on a similarity reference threshold.

According to an embodiment, when the minimum number of detected image (N) is automatically set based on the similarity reference threshold, the computing system 1000 may set the minimum number of detected images (N) inversely proportional to the similarity reference threshold.

In other words, the computing system 1000 may acquire a greater amount of image data for detected similarity images based on a lower similarity reference.

Accordingly, the computing system 1000 may check more past judgment records to check a plurality of judgment opinions as the number of ambiguous cases for outlier judgement increases.

Simultaneously, the computing system 1000 may perform more efficient data processing by reducing the amount of data as the number of useful cases for outlier judgement increases.

Returning to the above, the computing system 1000, which has determined whether the number of detected similarity image meets the minimum number of detected images (N), may perform an additional similarity image detection process when the number of detected similarity image is less than the minimum number of detected images (N) (in other words, when the minimum number of detected images is not met (N)).

Specifically, in an embodiment, the computing system 1000 may re-perform the aforementioned stages S303 and/or S305 based on the remaining overkill images (PIIs) excluding previously detected similarity images (in other words, previously detected overkill images (PIIs) determined to be similar to the inspection image (IIM)).

In this connection, in an embodiment, the computing system 1000 may perform an additional similarity image detection process by lowering the aforementioned similarity reference threshold by a user-set and/or preset value.

Accordingly, in an embodiment, the computing system 1000 may acquire at least one additionally detected similarity image (hereinafter, an additional detection image) in stage S303, and repeat the filtering process in stage S305 by further including the same in the similarity image corresponding to the inspection image (IIM).

In other words, when the number of detected similarity images does not meet the preset number, the computing system 1000 may relax the similarity image detection reference to further acquire and use additional similarity images.

Accordingly, the computing system 1000 may easily secure a sufficient amount of data necessary for the smooth operation of the outlier judgement guide and monitoring service.

In contrast, in an embodiment, when the number of detected similarity images is greater than or equal to the minimum number of detected images (N) (in other words, when the minimum number of detected images (N) is met), the computing system 1000 may determine at least one similarity guide image based on the determined similarity for each detected similarity image.

Herein, the term "similarity guide image" according to an embodiment may mean a similarity image finally determined to be provided to a user (in an embodiment, a worker) through a display output among at least one similarity image detected from the search database.

In detail, in an embodiment, the computing system 1000 may determine whether the determined similarity for each detected similarity image satisfies a predetermined reference (for example, within the top M (M>0)%).

Furthermore, in an embodiment, the computing system 1000 may determine at least one similarity image that satisfies a predetermined reference as the similarity guide image.

In addition, in an embodiment, the computing system 1000 may perform the process described below based on the determined at least one similarity guide image.

Herein, depending on an embodiment, the computing system 1000 may automatically perform the filtering process described above only when the number of detected similarity images is greater than or equal to the minimum number of detected images (N).

Furthermore, in an embodiment, the computing system 1000 may provide filtered similarity images (S307).

In other words, in an embodiment, the computing system 1000 may provide at least one similarity guide image determined as described above.

In detail, in an embodiment, the computing system 1000 may display, output and provide the similarity guide image and corresponding judgment detailed information as a predetermined graphic image in conjunction with the MIU.

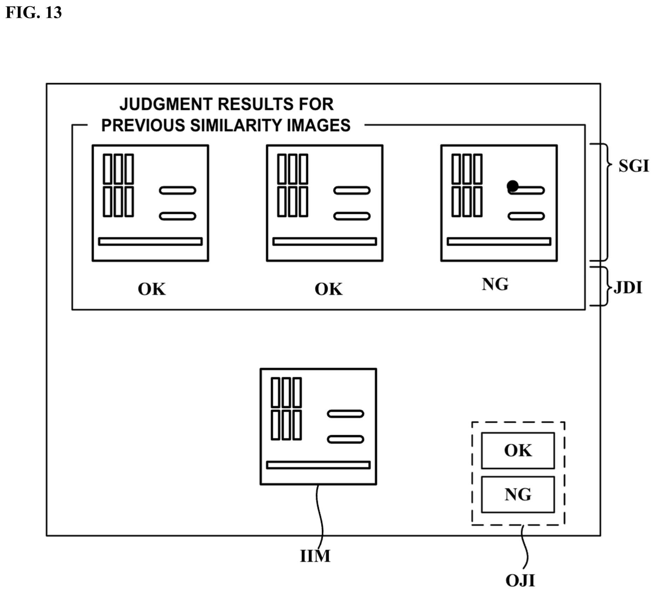

FIG. 13 is an example diagram illustrating a method for providing similarity images according to an embodiment of the present disclosure.

In this connection, Referring to FIG. 13, in an embodiment, the computing system 1000 may provide each of the at least one similarity guide image (SGI) and judgment detailed information (JDI) corresponding to each of the similarity guide images (SGI) by mutual matching.

In addition, in an embodiment, the computing system 1000 may match the corresponding inspection images (IIMs) together for provision.

Specifically, in an embodiment, the computing system 1000 may match at least some pieces of metadata information among various pieces of metadata related to the judgement on the presence or absence of an outlier in each SGI and at least one SGI corresponding to the inspection image (IIM) (in an embodiment, the worker-in-charge information, judgment result information, judgment result feedback information, and/or defect type information) for provision.

In this connection, depending on an embodiment, the computing system 1000 may further match the decision similarity corresponding to the corresponding SGI for provision.

In other words, the computing system 1000 may further match a specific decision similarity value (score) indicating the degree of similarity between the corresponding SGI and the inspection image (IIM) for provision together.

As such, in an embodiment, the computing system 1000 may detect at least one overkill image (PII) similar to the inspection image (IIM) that a current worker is attempting to manually determine the presence or absence of an outlier, and provide the detected similarity image and previously determined data for judging the presence or absence of an outlier, so that the current worker may easily check the same.

In other words, the computing system 1000 may provide the current worker with the results for judging the presence or absence of a defect determined by the previous worker for images similar to the image currently being judged for defects.

Thus, the computing system 1000 may provide a guide to help current workers more easily and consistently judge the presence or absence of outliers based on past meaningful data and reduce errors.

Accordingly, the computing system 1000 may effectively improve the overall quality and performance of the vision inspection process.

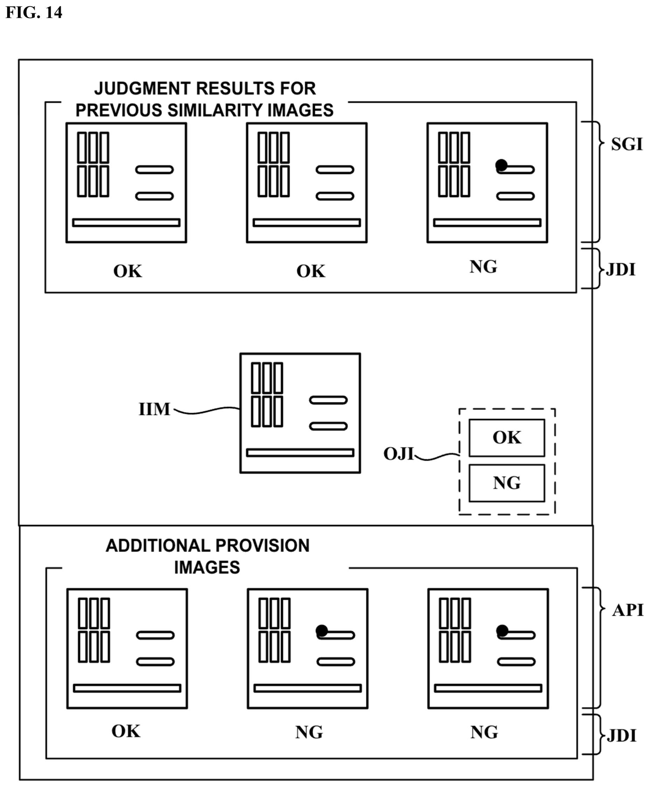

FIG. 14 is an example of providing additional provision images according to an embodiment of the present disclosure.

In this connection, referring to FIG. 14, according to an embodiment, the computing system 1000 may provide at least one additional provision image (API) based on judgment decision information for each provided SGI.

Herein, the API according to an embodiment may mean an image additionally provided when the ratio between judgment results for each SGI provided for the inspection image (IIM) does not meet a preset reference.

In detail, in an embodiment, the computing system 1000 may calculate the ratio between judgment results (in an embodiment, OK (in other words, no outliers) or NG (in other words, presence of outliers)) for each SGI provided for the inspection image (IIM).

For example, the computing system 1000 may calculate the ratio between judgment results, such as "OK:NG=2:1."

In addition, in an embodiment, the computing system 1000 may determine whether the ratio between the calculated judgment results satisfies a preset ratio (for example, "OK:NG=1:1").

In this connection, in an embodiment, when it is determined that the preset ratio (hereinafter, "required judgment result ratio") is insufficient, the computing system 1000 may set the judgment result information and the number of images (hereinafter, "required image attribute information") needed to satisfy the required judgment result ratio.

For example, when the calculated judgment result ratio is "OK:NG=2:1," there are "two" OK SGIs and "one" NG SGI, and the required judgment result ratio is "OK:NG=1:1," the computing system 1000 may set the required image attribute information requesting one NG SGI.

In addition, in an embodiment, the computing system 1000 may extract at least one similarity image (hereinafter, a selected similarity image) filtered (in other words, removed) in stage S305 described above.

Depending on an embodiment, when it is determined that the preset ratio is insufficient, the computing system 1000 may perform the similarity image detection process described above in stage S305. A detailed description thereof applies to the description in S305.

In addition, in an embodiment, the computing system 1000 may determine the API based on the selected similarity image extracted as described above and/or the additional detection image acquired according to the similarity image detection process, and the required image attribute information set as described above.

In detail, in an embodiment, the computing system 1000 may determine at least one image among the selected similarity image and/or the additional detection image (in other words, next-priority images) as the API based on the required image attribute information.

More specifically, in an embodiment, the computing system 1000 may select at least one image that matches the required image attribute information from among the selected similarity images and/or additionally detected images.

For example, when "one NG SGI" is required according to the required image attribute information, the computing system 1000 may select "one" image with "NG" judgement result information from among the selected similarity images and/or additional detection images.

In this connection, when a plurality of images match the required image attribute information, the computing system 1000 may select the images in order of high decision similarity for each image.

Furthermore, in an embodiment, the computing system 1000 may decide at least one of the selected images as the API.

In addition, the computing system 1000 may further include the decided at least one API in the SGI and provide the same.

In other words, the computing system 1000 may display, output and provide the decided at least one API and corresponding JDI as a predetermined graphic image in conjunction with the MIU.

In other words, the computing system 1000 may further provide information through a display by matching each of at least one API with the JDI corresponding to each of the APIs.

As such, in an embodiment, the computing system 1000 may further provide additional guide images to compensate for biased judgment results for each of the SGIs provided to a worker or for cases of failing to meet a preset ratio.

Accordingly, the computing system 1000 may provide additional data to supplement when biased data is provided, such that only images judged as OK or only images judged as NG are provided, or a ratio of images judged as OK is excessively high. This supports a worker to determine the presence of outliers by referencing more diverse and reasonable data.

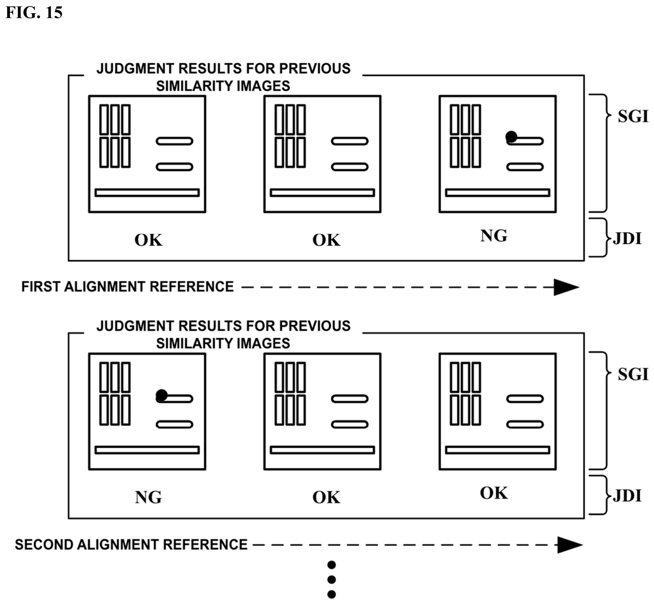

FIG. 15 is an example diagram illustrating a method for aligning similarity images upon provision according to an embodiment of the present disclosure.

In this connection, referring to FIG. 15, depending on an embodiment, the computing system 1000 may provide at least one SGI listed according to a predetermined alignment reference.

In an embodiment, the computing system 1000 may provide at least one SGI aligned in order of highest decision similarity of the SGI.

Furthermore, in an embodiment, the computing system 1000 may provide at least one SGI aligned in order of highest skill level information of the SGI.

Accordingly, the computing system 1000 may preferentially refer to the SGI that is more closely related to the inspection image (IIM) or that corresponds to the judgment results of a more skilled worker.

Accordingly, the computing system 1000 may provide a guide that further enhances the efficiency and precision of a worker in judging the presence or absence of an outlier.

Depending on an embodiment, the computing system 1000 may further link with an inspection post-processing unit (PPU) to provide judgment result feedback information corresponding to the SGI.

In other words, the computing system 1000 may together provide information on whether the past judgement result on the presence or absence of an outlier determined by a worker for each SGI is correct or incorrect.

Accordingly, when the SGI with a history of past incorrect determinations exists, the computing system 1000 may induce the current worker to carefully judge the presence or absence of an outlier for the inspection image (IIM).

Furthermore, according to an embodiment, the computing system 1000 may acquire the judgment result information for the inspection image (IIM) (S309).

Herein, in other words, the judgment result information according to an embodiment may be information specifying the result of the determination of the presence or absence of an outlier made by a worker-in-charge in a given inspection image (IIM) (herein, a current inspection image).

In an embodiment, the judgment result information may be OK (in other words, no outlier) or NG (in other words, the presence of an outlier).

In other words, in an embodiment, the computing system 1000 may acquire judgement data on the presence or absence of an outlier determined by the current worker for the inspection image (IIM) for which the current presence or absence of an outlier is to be judged.

Referring further to FIG. 13, in an embodiment, the computing system 1000 may provide a user interface (OJI: hereinafter, an outlier judgment input interface) for inputting the judgment result information for the inspection image (IIM) in conjunction with the MIU.

Furthermore, the computing system 1000 may acquire the judgment result information for the inspection image (IIM) described above based on a user (herein, the current worker) input based on the provided OJI.

Thus, the computing system 1000 may acquire judgement result data on the presence or absence of an outlier determined in the current inspection image (IIM) determined by the current worker by referring to past judgment records for cases similar to the current inspection image (IIM).

Furthermore, in an embodiment, the computing system 1000 may store and manage the acquired judgment result information (S311).

In detail, in an embodiment, the computing system 1000 may match the judgment result information (hereinafter, real-time judgment result information) acquired for the inspection image (IIM) with the corresponding inspection image (IIM) and store and manage the same in the IDU.

In this connection, in an embodiment, the computing system 1000 may decide whether to store the inspection image (IIM) based on the decision similarity between the inspection image (IIM) and the SGI.

Specifically, in an embodiment, the computing system 1000 may compare the decision similarity between the inspection image (IIM) and each corresponding SGI with a preset threshold (hereinafter, an image recording threshold).

In this connection, in an embodiment, when the SGI with the decision similarity greater than or equal to the image recording threshold exists, the computing system 1000 may not store the corresponding inspection image (IIM) in the IDU.

In an embodiment, when the decision similarity between the inspection image (IIM) and each SGI is less than the image recording threshold, the computing system 1000 may store the corresponding inspection image (IIM) in the IDU.

In other words, in an embodiment, when the overkill image (PII) with a similarity greater than or equal to a predetermined threshold exists with respect to the inspection image (IIM), the computing system 1000 may determine that the inspection image (IIM) is highly likely to be a duplicate image with an existing image presently stored in the IDU, and may not store the corresponding inspection image (IIM) in the IDU in order to eliminate this duplication.

Accordingly, the computing system 1000 may implement the outlier judgement guide and the monitoring service that performs data processing and operations more efficiently.

In this connection, depending on an embodiment, when the SGI (hereinafter, a suspected duplicate image) with the decision similarity greater than or equal to the image recording threshold exists, the computing system 1000 may decide whether to store the inspection image (IIM) based on the judgement result information of each of the suspected duplicate image and the inspection image (IIM).

Specifically, in an embodiment, the computing system 1000 may intercompare the judgment result information (hereinafter, judgment result inspection information) of the inspection image (IIM) with the judgment result information (hereinafter, judgment result suspicion information) of the suspected duplicate image.

In this connection, in an embodiment, when the judgment result inspection information and the judgment result suspicion information are different, the computing system 1000 may store the corresponding inspection image (IIM) in the IDU, even when a suspected duplicate image exists.

For example, when the judgment result inspection information is "OK" and the judgment result suspicion information is "NG," the computing system 1000 may store the corresponding inspection image (IIM) in the IDU.

As such, in an embodiment, even when there is the overkill image (PII) with the similarity greater than or equal to a predetermined threshold to the inspection image (IIM), in the case where the judgement on the presence or absence of an outlier determined for the inspection image (IIM) differs from the judgement on the presence or absence of an outlier determined for the overkill image (PII) (in other words, the suspected duplicate image) with the similarity greater than or equal to a predetermined threshold, the computing system 1000 may determine that the inspection image (IIM) contains meaningful information different from the overkill image (PII) presently stored in the IDU and store the corresponding inspection image (IIM) in the IDU.

As such, the computing system 1000 selectively decides whether to store the inspection image (IIM) based on the decision similarity between the inspection image (IIM) and the SGI, thereby minimizing the issue of infinite data growth in the inspection database (IDU) and building the IDU based on valuable data containing more meaningful information.

As described above, the method and system for monitoring judgment records for an outlier judgment guide according to an embodiment of the present disclosure provide a guide for judging an outlier in real time based on past outlier judgement records to help improve the consistency of real-time outlier judgment and minimize errors, thereby improving the overall quality and performance of a vision inspection process.

In this connection, the method and system for monitoring the judgment records for the outlier judgment guide according to an embodiment of the present disclosure utilizes a deep learning model specified in anomaly detection using a patch feature-based learning method to provide a guide for judging an outlier, thereby improving the quality of the guide provided and also improving the data processing efficiency for providing the guide.

The embodiments of the present disclosure described above may be implemented in the form of program commands which may be executed through various types of computer constituting elements and recorded in a computer-readable recording medium. The computer-readable recording medium may include program commands, data files, and data structures separately or in combination thereof. The program commands recorded in the computer-readable recording medium may be those designed and configured specifically for the present disclosure or may be those commonly available for those skilled in the field of computer software. Examples of a computer-readable recoding medium may include magnetic media such as hard-disks, floppy disks, and magnetic tapes; optical media such as CD-ROMs and DVDs; and hardware devices specially designed to store and execute program commands such as ROM, RAM, and flash memory. Examples of program commands include not only machine codes such as those generated by a compiler but also high-level language codes which may be executed by a computer through an interpreter and the like. The hardware device may be replaced with by one or more software modules to perform the operations of the present disclosure, and vice versa.

Specific executions described in the present disclosure are exemplary embodiments and the scope of the present disclosure is not limited even by any method. For brevity of the specification, descriptions of conventional electronic configurations, control systems, software, and other functional aspects of the systems may be omitted. Further, connection or connection members of lines among components exemplarily represent functions connections and/or physical or circuitry connections and may be represented as various functional connections, physical connections, or circuitry connections which are replaceable or added in an actual device. Further, unless otherwise specified, such as "essential" or "important," the connections may not be components particularly required for application of the present disclosure.

Further, in the detailed description of the present disclosure, which is described, while the present disclosure has been described with respect to the preferred embodiments, it will be understood by those skilled in the art or those skilled in the art having ordinary knowledge in the technical field that various changes and modifications of the present disclosure may be made without departing from the spirit and the technical scope of the invention described in the following claims. Accordingly, the technical scope of the present disclosure should not be limited to the contents described in the detailed description of the present disclosure but should be defined by the claims.

Industrial Applicability

An embodiment of the present disclosure relates to a method and device for executing a program that captures a product produced using a machine learning model and judges whether there is an outlier, and thus has industrial applicability.

**Claims**

1. A method performed by a computing system 1000 for monitoring judgment records for an outlier judgment guide, the method comprising:

   acquiring a predetermined inspection image;
   detecting at least one similarity image having a similarity greater than or equal to a predetermined reference with the acquired inspection image;
   providing judgment detailed information, which is information specifying a judgement content on the presence or absence of an outlier for each of the detected similarity image and the similarity image;
   acquiring first judgment result information, which is information specifying a determination result on the presence or absence of the outlier for the inspection image; and
   storing the inspection image and the first judgment result information in a database depending on a similarity between each of the inspection image and the similarity image.

2. The method of claim 1, wherein the provision of the judgment detailed information comprises providing at least one piece of information among worker-in-charge information, which is information specifying a worker-in-charge who performed a determination on the presence or absence of the outlier for the similarity image, and second judgement result information, which is information specifying a determination result on the presence or absence of the outlier for the similarity image.

3. The method of claim 1, wherein the detection of the similarity image comprises measuring a raw data similarity between at least one overkill image stored in the database and the inspection image.

4. The method of claim 3, wherein the detection of the similarity image further comprises:

   acquiring an inspection feature vector, which is a feature vector for the inspection image, and an overkill feature vector, which is a feature vector for the overkill image, based on a predetermined image feature extraction model; and
   measuring a feature vector similarity, which is a similarity between the acquired inspection feature vector and the overkill feature vector.

5. The method of claim 4, wherein the image feature extraction model comprises an outlier detection model, which is a deep learning model specified in anomaly detection using a patch feature-based learning method.

6. The method of claim 4, wherein the detection of the similarity image further comprises calculating a decision similarity that specifies a final similarity between the inspection image and the overkill image based on the raw data similarity and the feature vector similarity.

7. The method of claim 6, wherein the detection of the similarity image further comprises detecting the similarity image based on the decision similarity and a preset similarity reference threshold.

8. The method of claim 7, wherein the detection of the similarity image further comprises:

determining whether the number of detected similarity images meets a preset number thereof; and
additionally detecting the similarity image when the preset number thereof is not met.

9. The method of claim 8, wherein the additional detection of the similarity image comprises:

adjusting the similarity reference threshold; and
detecting the similarity image based on the adjusted similarity reference threshold.

10. The method of claim 6, wherein the provision of the similarity image and the judgement detailed information comprises further providing the decision similarity.

11. The method of claim 2, wherein the provision of the similarity image and the judgement detailed information comprises:

additionally detecting the similarity image according to a ratio of second judgment result information for each of the at least one similarity image; and
further providing additional provision images, which are the additionally detected similarity images.

12. The method of claim 2, wherein the provision of the similarity image and the judgement detailed information comprises aligning the detected similarity images based on at least one of the worker-in-charge information or the similarity between each of the inspection image and the similarity image.

13. The method of claim 2, wherein the storage in the database further comprises storing the inspection image and the first judgment result information in the database according to whether the first judgment result information and second judgment result information are identical.

14. The method of claim 1, further comprising filtering the detected similarity images according to a preset condition.

15. The method of claim 1, wherein the acquisition of the inspection image comprises acquiring the inspection image based on an outlier detection model, which is a deep learning model specified in anomaly detection using a patch feature-based learning method.

16. A system for monitoring judgment records for an outlier judgment guide, the system comprising:

at least one vision inspection unit;
at least one inspection monitoring processing unit;
at least one monitoring interface (IF) unit; and
at least one inspection database, and the system performing operations of:

controlling the vision inspection unit to acquire a predetermined inspection image;
controlling the inspection monitoring processing unit to detect at least one similarity image having a similarity greater than or equal to a predetermined reference with the acquired inspection image;
controlling the monitoring IF unit to provide judgment detailed information, which is information specifying a judgement content on the presence or absence of an outlier for each of the detected similarity image and the similarity image;
controlling the monitoring IF unit to acquire first judgment result information, which is information specifying a determination result on the presence or absence of the outlier for the inspection image; and
controlling the inspection monitoring processing unit to store the inspection image and the first judgment result information in a database depending on the similarity between each of the inspection image and the similarity image.

17. A computing device 110, comprising:

at least one vision inspection unit;
at least one inspection monitoring processing unit;
at least one monitoring interface (IF) unit; and
at least one inspection database, and being configured to:

control the vision inspection unit to acquire a predetermined inspection image;

control the inspection monitoring processing unit to detect at least one similarity image having a similarity greater than or equal to a predetermined reference with the acquired inspection image;

control the monitoring IF unit to provide judgment detailed information, which is information specifying a judgement content on the presence or absence of an outlier for each of the detected similarity image and the similarity image;

control the monitoring IF unit to acquire first judgment result information, which is information specifying a determination result on the presence or absence of the outlier for the inspection image; and

control the inspection monitoring processing unit to store the inspection image and the first judgment result information in a database depending on the similarity between each of the inspection image and the similarity image.

**FIG. 1**

**FIG. 2**

**FIG. 3**

**FIG. 4**

**FIG. 5**

**FIG. 6**

| | |
|---|---|
| ACQUIRE FEATURE MAP, BASED ON PRETRAINED MODEL | S101 |

↓

| | |
|---|---|
| EXTRACT PLURALITY OF PATCH FEATURES, BASED ON ACQUIRED FEATURE MAP | S103 |

↓

| | |
|---|---|
| PERFORM FEATURE REPRESENTATION LEARNING, BASED ON PLURALITY OF EXTRACTED PATCH FEATURES | S105 |

↓

| | |
|---|---|
| ACQUIRE RECONPATCH FEATURE ACCORDING TO PERFORMED FEATURE REPRESENTATION LEARNING | S107 |

↓

| | |
|---|---|
| PERFORM CORESET SAMPLING, BASED ON ACQUIRED RECONPATCH FEATURE | S109 |

↓

| | |
|---|---|
| ACQUIRE TEST SAMPLE IMAGE | S111 |

↓

| | |
|---|---|
| ACQUIRE RECONPATCH FEATURE ACCORDING TO ACQUIRED TEST SAMPLE IMAGE | S113 |

↓

| | |
|---|---|
| PERFORM ANOMALY DETECTION BASED ON ACQUIRED RECONPATCH FEATURE | S115 |

**FIG. 7**

| PROJECT ANY PATCH FEATURE PAIR INTO PREDETERMINED FEATURE REPRESENTATION SPACE | ～ S201 |

↓

| CALCULATE PAIRWISE SIMILARITY BASED ON PATCH FEATURE PAIR PROJECTED INTO FEATURE REPRESENTATION SPACE | ～ S203 |

↓

| CALCULATE CONTEXTUAL SIMILARITY BASED ON PATCH FEATURE PAIR PROJECTED INTO FEATURE REPRESENTATION SPACE | ～ S205 |

↓

| CALCULATE INTEGRATED SIMILARITY, BASED ON PAIRWISE SIMILARITY AND CONTEXTUAL SIMILARITY | ～ S207 |

↓

| TRAIN SECOND NETWORK OF ANOMALY DETECTION MODEL, BASED ON CALCULATED INTEGRATED SIMILARITY | ～ S209 |

↓

| TRAIN FIRST NETWORK OF ANOMALY DETECTION MODEL | ～ S211 |

**FIG. 8**

(a)

(b)

**FIG. 9**

**FIG. 10**

```
┌─────────────────────────────────────────────┐
│ ACQUIRE PREDETERMINED INSPECTION IMAGE        │───  S301
└─────────────────────────────────────────────┘
                      │
                      ▼
┌─────────────────────────────────────────────┐
│ DETECT SIMILARITY IMAGE FOR ACQUIRED          │───  S303
│ INSPECTION IMAGE                              │
└─────────────────────────────────────────────┘
                      │
                      ▼
┌─────────────────────────────────────────────┐
│ FILTER DETECTED SIMILARITY IMAGE              │───  S305
└─────────────────────────────────────────────┘
                      │
                      ▼
┌─────────────────────────────────────────────┐
│ PROVIDE FILTERED SIMILARITY IMAGE             │───  S307
└─────────────────────────────────────────────┘
                      │
                      ▼
┌─────────────────────────────────────────────┐
│ ACQUIRE JUDGEMENT RESULT INFORMATION          │───  S309
│ FOR INSPECTION IMAGE                          │
└─────────────────────────────────────────────┘
                      │
                      ▼
┌─────────────────────────────────────────────┐
│ STORE AND MANAGE ACQUIRED JUDGEMENT RESULT    │───  S311
│ INFORMATION                                   │
└─────────────────────────────────────────────┘
```

**FIG. 11**

MEASURE RAW DATA SIMILARITY BETWEEN INSPECTION IMAGE AND OVERKILL IMAGE — S401

ACQUIRE FEATURE VECTORS FOR EACH OF INSPECTION IMAGE AND OVERKILL IMAGE — S403

MEASURE SIMILARITY BETWEEN ACQUIRED FEATURE VECTORS — S405

CALCULATE DECISION SIMILARITY BASED ON RAW DATA SIMILARITY AND/OR SIMILARITY BETWEEN MEASURED FEATURE VECTORS — S407

DETECT AT LEAST ONE SIMILARITY IMAGE BASED ON CALCULATED DECISION SIMILARITY — S409

**FIG. 12**

**FIG. 13**

JUDGMENT RESULTS FOR
PREVIOUS SIMILARITY IMAGES

OK          OK          NG

SGI

JDI

IIM

OK
NG

OJI

**FIG. 14**

**FIG. 15**

JUDGMENT RESULTS FOR PREVIOUS SIMILARITY IMAGES

SGI

JDI

OK   OK   NG

FIRST ALIGNMENT REFERENCE ⟶

JUDGMENT RESULTS FOR PREVIOUS SIMILARITY IMAGES

SGI

JDI

NG   OK   OK

SECOND ALIGNMENT REFERENCE ⟶

## INTERNATIONAL SEARCH REPORT

| International application No. |
| --- |
| **PCT/KR2025/003007** |

| A. | CLASSIFICATION OF SUBJECT MATTER |
| --- | --- |

**G06T 7/00**(2006.01)i; **G06V 10/74**(2022.01)i; **G06V 10/44**(2022.01)i; **G06V 10/82**(2022.01)i; **G06T 5/70**(2024.01)i; **G06N 20/00**(2019.01)i

According to International Patent Classification (IPC) or to both national classification and IPC

| B. | FIELDS SEARCHED |
| --- | --- |

Minimum documentation searched (classification system followed by classification symbols)

G06T 7/00(2006.01); G06F 18/00(2023.01); G06K 9/62(2006.01); G06N 20/00(2019.01); G06N 3/08(2006.01); H04N 5/235(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이미지 (image), 유사도 (similarity), 어노말리 디텍션 (anomaly detection), 임계치 (threshold), 비전검사 (vision inspection)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2022-0050083 A (LG ELECTRONICS INC.) 22 April 2022 (2022-04-22) <br> paragraphs [0045]-[0109] | 1-17 |
| A | KR 10-2023-0138335 A (LG MANAGEMENT DEVELOPMENT INSTITUTE CO., LTD.) 05 October 2023 (2023-10-05) <br> paragraphs [0040]-[0110] | 1-17 |
| A | KR 10-2023-0065558 A (KOREA UNIVERSITY OF TECHNOLOGY AND EDUCATION INDUSTRY-UNIVERSITY COOPERATION FOUNDATION) 12 May 2023 (2023-05-12) <br> paragraphs [0026]-[0062] | 1-17 |
| A | US 2023-0082268 A1 (MITUTOYO CORPORATION) 16 March 2023 (2023-03-16) <br> claims 1-14 | 1-17 |
| A | US 2022-0327689 A1 (OPTUM, INC.) 13 October 2022 (2022-10-13) <br> claims 1-14 | 1-17 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 May 2025** | **12 June 2025** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2025/003007**

| Patent document cited in search report | | | Publication date (day/month/year) | Patent family member(s) | | | Publication date (day/month/year) |
|---|---|---|---|---|---|---|---|
| KR | 10-2022-0050083 | A | 22 April 2022 | CN | 113924594 | A | 11 January 2022 |
| | | | | EP | 4020380 | A1 | 29 June 2022 |
| | | | | EP | 4020380 | A4 | 10 May 2023 |
| | | | | US | 12051187 | B2 | 30 July 2024 |
| | | | | US | 2022-0222807 | A1 | 14 July 2022 |
| | | | | WO | 2021-033791 | A1 | 25 February 2021 |
| KR | 10-2023-0138335 | A | 05 October 2023 | US | 2025-0014318 | A1 | 09 January 2025 |
| | | | | WO | 2023-182796 | A1 | 28 September 2023 |
| KR | 10-2023-0065558 | A | 12 May 2023 | KR | 10-2602167 | B1 | 13 November 2023 |
| | | | | US | 12210061 | B2 | 28 January 2025 |
| | | | | US | 2024-0103076 | A1 | 28 March 2024 |
| | | | | WO | 2023-080587 | A1 | 11 May 2023 |
| US | 2023-0082268 | A1 | 16 March 2023 | CN | 115809984 | A | 17 March 2023 |
| | | | | DE | 102022123355 | A1 | 16 March 2023 |
| | | | | JP | 2023-043178 | A | 28 March 2023 |
| | | | | US | 11756186 | B2 | 12 September 2023 |
| US | 2022-0327689 | A1 | 13 October 2022 | | None | | |

Form PCT/ISA/210 (patent family annex) (July 2022)

**EP 4 679 365 A1**

**Patent documents cited in the description**

- KR 102296471 B1